# EUROPÄISCHE PATENTANMELDUNG

(11) **EP 4 506 188 A1**
(43) Veröffentlichungstag der Anmeldung: **12.02.2025**
(21) Anmeldenummer: 23190977.1
(22) Anmeldetag: 11.08.2023
(51) Int. Cl.: B60C 23/00, B60C 23/04

(54) **REIFENDRUCKÜBERWACHUNG**

(71) Anmelder: Schmitz Cargobull AG, 48341 Altenberge (DE)
(72) Erfinder: Vens, Rainer, 48653 Coesfeld (DE)
(74) Vertreter: Cohausz & Florack

(57) **Zusammenfassung**

Es werden Verfahren und Vorrichtungen zur Reifendrucküberwachung vorgeschlagen.

## Beschreibung

### Gebiet

Die Erfindung betrifft Verfahren und Vorrichtungen zur Reifendrucküberwachung, insbesondere eines Reifens eines Fahrzeuges, insbesondere eines Nutzfahrzeuges, insbesondere eines Straßennutzfahrzeuges.

### Hintergrund

Heutzutage werden im privaten und gewerblichen Straßenverkehr fast ausschließlich bereifte Fahrzeuge betrieben, deren Räder mit gasgefüllten Reifen ausgestattet sind. Für die Funktionsfähigkeit dieser Räder ist ein ausreichender, jedoch nicht zu hoher Reifendruck notwendig. Ein zu niedriger Reifendruck kann beispielsweise den Rollwiderstand des Reifens und damit Verschleiß und Fahrkosten erhöhen. Ein zu hoher Reifendruck hingegen kann zu Beschädigungen des Reifens und damit zu Fahrtausfällen führen.

Eine manuelle Überwachung des Reifendrucks durch die Nutzer des jeweiligen Fahrzeugs ist aufwändig und wird allzu häufig nicht in der erforderlichen Regelmäßigkeit vollzogen. Die Folge ist ein erhöhtes Risiko eines falschen (insbesondere zu niedrigen aber auch möglicherweise zu hohen) Reifendrucks.

### Zusammenfassung einiger beispielhafter Ausführungsformen der Erfindung

Die Erfindung befasst sich unter anderem damit, eine Reifendrucküberwachung mit einer entsprechenden Sensorik bereitzustellen. An oder in einem Rad umfassend einen Reifen und eine Felge (z.B. und ein Ventil) wird hierbei ein jeweiliger Drucksensor verbaut, der den Druck des Gases im Reifen erfasst. Vorteilhaferweise kann eine teilweise automatisierte, sensorbasierte Reifendrucküberwachung den Nutzer seiner Pflicht entheben, den Reifendruck manuell zu erfassen. Damit wird das Risiko menschlichen Versagens in Form lückenhafter Reifendruckkontrollen reduziert. Die Fahrt wird sicherer und günstiger.

Doch auch bei einer sensorbasierten Reifendrucküberwachung können menschliche Fehler die Überwachungsgüte beeinträchtigen. So ist es beispielsweise nicht selten erforderlich, bei der Installation von Reifendrucksensoren und/oder bei jedem Rad- und/oder Reifenwechsel eine Verknüpfung zwischen einer (z.B. neuen) Radposition und dem jeweiligen Reifendrucksensor in einem zugehörigen Überwachungssystem einzupflegen. Fehlerhafte Zuordnungen können die korrekte Funktionsweise der Reifendrucküberwachung verhindern und führen zu weiteren Risiken, insbesondere wenn sich der Nutzer des Fahrzeugs auf die korrekte Funktionsweise einer automatisierten Reifendrucküberwachung verlässt. Darüber hinaus ist eine manuelle Zuordnung zwischen Radposition und Reifendrucksensor aufwendig und erhöht die Instandhaltungskosten des Fahrzeugs.

Eine Aufgabe der vorliegenden Erfindung ist es daher, Verfahren und Vorrichtungen zur Reifendrucküberwachung bereitzustellen, welche eine automatisierte Zuordnung zwischen Reifendrucksensoren und Radpositionen erleichtern und/oder ermöglichen. Insbesondere soll diese Aufgabe mit der am Fahrzeug bereits existierenden Reifendrucksensorik gelöst werden.

Gemäß einem ersten Aspekt der Erfindung wird ein Verfahren zur Reifendrucküberwachung eines Fahrzeugs, insbesondere Nutzfahrzeugs, ausgeführt durch eine Reifendrucksensoranordnung, vorgeschlagen, umfassend
- Erfassen eines Innendrucks eines Reifens eines Rads,
- Senden eines Kommunikationssignals umfassend eine Reifendruckindikation und eine Laufwegindikation, wobei die Reifendruckindikation zumindest den erfassten Innendruck des Reifens repräsentiert, und wobei die Laufwegindikation zumindest einen von dem Rad zurückgelegten Laufweg repräsentiert.

Ein Fahrzeug kann vorliegend insbesondere ein bereiftes Fahrzeug sein. Beispielsweise kann das Fahrzeug zumindest 1, 2, 3, 4, 6, 8, 10, 12 oder mehr Räder mit jeweiligem Reifen aufweisen. Das offenbarte Fahrzeug kann beispielsweise ein Fahrzeug für den privaten Straßenverkehr, insbesondere ein motorisiertes Zwei- oder Dreirad (Motorrad, Moped, Roller) oder ein Personenkraftwagen (PKW) sein.

Das offenbarte Fahrzeug kann insbesondere ein Nutzfahrzeug sein, zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Das offenbarte Verfahren umfasst das Erfassen eines Innendrucks eines Reifens eines Rads. Das Rad ist hierbei insbesondere ein Rad des Fahrzeugs. Das Rad kann an einer Radachse des Fahrzeugs angeordnet sein, welche beispielsweise mit einer Rotationsachse des Rades zusammenfallen kann. Das Rad umfasst insbesondere eine Felge und einen Reifen. Der Reifen kann auf die Felge aufgespannt sein. Ein Innenraum des Rads, welcher insbesondere von dem Reifen und der Felge begrenzt sein kann, ist mit einem Gas gefüllt, insbesondere Luft. Der Innenraum ist beispielsweise durch ein Ventil des Rads mit dem Gas befüllbar und/oder entleerbar. In dem Innenraum des Reifens besteht ein Innendruck. Der Innendruck kann beispielsweise für PKW im Bereich 2-3 bar liegen. Bei Nutzfahrzeugen können höhere Innendrücke im Bereich 8-10 bar vorliegen.

Ein Rad ist also insbesondere ein am Fahrzeug montiertes Rad. Das Rad kann eine (insbesondere feste und/oder unveränderliche) Radposition am Fahrzeug haben. Eine Radposition kann beispielsweise durch die Fahrzeugseite (beispielsweise in Vorwärtsfahrtrichtung links oder rechts) bestimmt sein. Eine Radposition kann alternativ oder zusätzlich entlang der Vorwärtsfahrtrichtung (beispielsweise in Vorwärtsfahrtrichtung hinten oder vorne, an Position 1 von N, wobei 1 der in Vorwärtsfahrtrichtung vordersten Position und N der in Vorwärtsfahrtrichtung hinteren Position entspricht) definiert sein. Eine Radposition kann alternativ oder zusätzlich in seiner Position entlang einer Radachse und/oder Rotationsachse des Rads und/oder senkrecht zur Vorwärtsfahrtrichtung definiert sein, insbesondere im Falle von mehreren Rädern, welche direkt nebeneinander auf der Radachse angeordnet sind (bspw. im Falle von Zwillingsrädern). Eine beispielhafte Radposition könnte beispielsweise durch die obigen drei Positionsangaben als (links, Position 1, zweites Rad von außen) definiert sein.

Der Innendruck eines Reifens eines Rads des Fahrzeugs kann insbesondere mittels eines Drucksensors einer Reifendrucksensoranordnung erfasst werden. Die Reifendrucksensoranordnung kann insbesondere im Bereich eines Rads des Fahrzeugs angeordnet sein, beispielsweise im oder am Reifen eines Rads und/oder an einer Felge des Rads und/oder einem Ventil des Rads. Die Reifendrucksensoranordnung kann zumindest einen Drucksensor und Mittel zur Ausführung des Verfahrens nach dem ersten Aspekt umfassen.

Der Innendruck kann kontinuierlich und/oder periodisch, insbesondere in vordefinierten Intervallen, erfasst werden. Beispielsweise kann der Innendruck in zeitlichen Abständen von zumindest 10s, 30s, 1min, 2min, 5min, 10min, 15min, 20min, 30min, 40min, 50min, 1h, 2h, 3h, 4h, 5h, 10h, 12h, 1d oder länger bestimmt werden. Beispielsweise kann der zeitliche Abstand auch höchstens 10s, 30s, 1min, 2min, 5min, 10min, 15min, 20min, 30min, 40min, 50min, 1h, 2h, 3h, 4h, 5h, 10h, 12h, 1d oder weniger betragen.

Das offenbarte Verfahren umfasst ferner das Senden eines Kommunikationssignals.

Das Kommunikationssignal ist insbesondere ein drahtloses Kommunikationssignal, beispielsweise nach einem drahtlosen Kommunikationsstandard wie ein Bluetooth (https://www.bluetooth.com), Zigbee, einem anderen Kommunikationsstandard, einer nicht standardisierten, beispielsweise proprietären Funkmethode, und/oder Kombinationen hieraus. Das Kommunikationssignal kann auf eine Trägerfrequenz aufmoduliert sein, beispielsweise einer Trägerfrequenz von einigen hundert MHz, beispielsweise 200 - 800 MHz, beispielsweise 433 MHz oder auch höhere Frequenzen von 2,4 bis 2,4835 GHz (z.B. Bluetooth).

Das Kommunikationssignal kann eine Gesamtsendung als ein einziges, zusammenhängendes Signal sein, welches in einem, also ohne eine Sendepause, übertragen wird. Auch kann das Kommunikationssignal in mehrere Teilsendungen unterteilt sein. Die Teilsendungen können in einem zeitlichen Abstand zueinander gesendet werden. Das Kommunikationssignal kann beispielsweise ein oder mehrere Datenpakete umfassen. beispielsweise mehrere voneinander separate Datenpakete, welche jeweils unabhängig von den übrigen Datenpaketen empfangen werden können. Eine Gesamtsendung kann mehrere Datenpakete umfassen. Auch können Teilsendungen jeweils zumindest ein Datenpaket umfassen. Eine Gesamtheit von Datenpaketen kann auf mehrere Teilsendungen aufgeteilt werden, sodass zumindest zwei Datenpakete in voneinander verschiedenen Teilsendungen übertragen werden.

Das Kommunikationssignal kann als Broadcast-Signal gesendet werden, beispielsweise ohne spezifischen Empfänger und ohne Notwendigkeit einer Rückmeldung seitens des Empfängers.

Für das Kommunikationssignal kann eine Sendedauer bestimmt sein, welche der Zeitspanne entspricht, welche zwischen dem Beginn und dem Ende des Sendens verstreicht. Auch kann für das Kommunikationssignal ein Sendezeitpunkt bestimmt sein, beispielsweise kann dieser den Beginn des Sendens des Kommunikationssignals, die Vollendung des Sendens oder auch einen Zeitpunkt während der Sendedauer (beispielsweise die zeitliche Mitte der Sendedauer) bezeichnen.

Das Kommunikationssignal umfasst eine Reifendruckindikation. Die Reifendruckindikation repräsentiert zumindest den erfassten Innendruck des Reifens.

Wenn hier und im Folgenden eine Indikation (hier die Reifendruckindikation) eine Information repräsentiert (hier den erfassten Innendruck des Reifens), ist damit insbesondere gemeint, dass die Information aus der Indikation ableitbar ist. Die Indikation kann beispielsweise ein Informationselement sein, beispielsweise eine Abfolge von Bits, welche mit einer geeigneten Auswertungsmethode in die Information umgewandelt werden kann. Die Umwandlung der Indikation in die Information kann weitere Angaben benötigen. Beispielsweise kann eine Reifendruckindikation einem Index zu einer Tabelle mit Innendruckwerten eines Reifens entsprechen. Es ist aber auch möglich, dass aus der Indikation allein, ohne Zuhilfenahme weiterer Angaben, die Information abgeleitet werden kann. Beispielsweise kann die Reifendruckindikation einem Fließkommawert entsprechen, welcher in dem Kommunikationssignal enthalten ist und der den Reifeninnendruck angibt.

Die Reifendruckindikation kann beispielsweise den (insbesondere zum Zeitpunkt der aktuellen Messung) erfassten Innendruck des Reifens repräsentieren. Auch möglich ist es, dass die Reifendruckindikation einen aus dem erfassten Innendruck abgeleiteten Wert repräsentiert. Beispielsweise kann die Reifendruckindikation einen Mittelwert, Median, Maximalwert, Minimalwert über eine Mehrzahl von erfassten Innendrücken und/oder Kombinationen hieraus repräsentieren. Die Mehrzahl von erfassten Innendrücken kann beispielsweise 2, 3, 4, 5, 10, 20 oder mehr erfasste Innendrücke umfassen. Die Mehrzahl von erfassten Innendrücken kann beispielsweise die zuletzt erfassten Innendrücke, beispielsweise welche nach dem letzten Senden erfasst wurden, umfassen.

Das Kommunikationssignal umfasst ferner eine Laufwegindikation. Die Laufwegindikation repräsentiert zumindest einen von dem Rad zurückgelegten Laufweg des Rads.

Durch das Senden der Laufwegindikation wird ein Empfänger in die Lage versetzt, das empfangene Kommunikationssignal mit einem von dem Rad zurückgelegten Laufweg des Rads in Beziehung zu setzen. Es wurde erkannt, dass bei geeigneter Verarbeitung der Laufwegindikation eine automatische Zuordnung zwischen einem Reifendrucksensor und einer Radposition, an welcher der Reifendrucksensor angeordnet ist, vorgenommen werden kann.

Die Laufwegindikation kann beispielsweise eine von dem Rad zurückgelegte Strecke und/oder einen von dem Rad zurückgelegten Winkel und/oder eine von dem Rad zurückgelegte Anzahl von Umdrehungen repräsentieren. Der Laufweg kann beispielsweise ein zurückgelegter Laufweg sein, beispielsweise eine von dem Rad zurückgelegte Strecke und/oder ein von dem Rad zurückgelegten Winkel und/oder eine von dem Rad zurückgelegte Anzahl von Umdrehungen.

Die Laufwegindikation kann beispielsweise erlauben, einen zurückgelegten Laufweg abzuleiten. Die Laufwinkelindikation kann hierfür ein Informationselement umfassen, aus welchem der Laufweg abgeleitet werden kann, beispielsweise unter Zuhilfenahme weiterer Angaben (z.B. einer Tabelle und/oder eines physikalischen Modells des Reifens und/oder eines für diese Ableitung trainierten Modells des maschinellen Lernens). Die Laufwegindikation kann beispielsweise einen Momentanwert eines Drehwinkels, einer Strecke und/oder einer Anzahl von Umdrehungen umfassen. Der Momentanwert kann beispielsweise einem Anfangs- und oder einen Endpunkt eines Laufwegs entsprechen. Beispielsweise kann ein Laufweg aus dem Momentanwert, insbesondere in Kombination mit einem weiteren Momentanwert, abgeleitet werden. Auch kann die Laufwegindikation einen Laufweg umfassen, insbesondere derart, dass allein aus der Laufwegindikation der Laufweg abgeleitet werden kann.

Beispielsweise repräsentiert die Laufwegindikation, wie weit sich das Rad gedreht hat, insbesondere in eine Richtung oder auch in verschiedene Richtungen (z.B. beide, z.B. vorwärts und rückwärts). Beispielsweise kann die Laufwegindikation einen (z.B. zurückgelegten) Drehwinkel angeben, um den sich das Rad um seine Rotationsachse gedreht hat. Der von der Laufwegindikation repräsentierte Drehwinkel kann beispielsweise integriert und/oder summiert sein, beispielsweise über eine Zeitspanne. Der zurückgelegte Laufweg kann weniger als eine Radumdrehung betragen oder mehr als eine Radumdrehung, insbesondere zumindest 2, 3, 4, 5, 6, 7, 8, 9, 10 oder mehr Radumdrehungen. Der Drehwinkel kann beispielsweise (z.B. betragsmäßig) zwischen 0 und 360° betragen. Auch kann der Drehwinkel zumindest 360° oder mehr betragen, falls das Rad zumindest eine vollständige Drehung oder mehr vollzogen hat. Die Laufwegindikation kann beispielsweise alternativ oder zusätzlich eine Anzahl von (z.B. vollständigen und/oder zurückgelegten) Umdrehungen des Rads umfassen. Beispielsweise kann die Laufwegindikation einen (z.B. ganzzahligen) Wert umfassen, der die Anzahl von (z.B. zurückgelegten, z.B. vollständigen) Umdrehungen angibt, wobei beispielsweise eine über die vollständigen Drehungen hinausgehende teilweise Drehung vernachlässig wird und/oder zusätzlich (z.B. zusätzlich zu einer Anzahl an vollständigen Umdrehungen) einen Bruchteil einer Umdrehung angibt.

Die Laufwegindikation kann beispielsweise alternativ oder zusätzlich eine Strecke repräsentieren, entlang derer das Rad gerollt ist. Beispielsweise kann eine Relation zwischen zurückgelegter Strecke und Drehwinkel über einen Radius des Rads hergestellt werden. Die Laufwegindikation kann beispielsweise alternativ oder zusätzlich einen positiven und/oder einen negativen Wert (beispielsweise Anzahl Umdrehungen des Rads, Winkel und/oder Strecke) angeben.

Eine Laufwegindikation kann für eine zugeordnete Zeitspanne definiert sein. Beispielsweise kann der von der Laufwegindikation repräsentierte Laufweg über die Zeitspanne erfasst, zurückgelegt, summiert und/oder integriert sein. Beispielsweise kann eine Drehwinkelgeschwindigkeit des Rades um die Rotationsachse über die Zeitspanne integriert sein, woraus sich ein summierter Drehwinkel als Laufweg ergibt. Beispielsweise kann eine zurückgelegte Strecke über die Zeitspanne summiert und/oder integriert sein.

Die Laufwegindikation kann alternativ oder zusätzlich einen Laufweg repräsentieren, der von einem Rad zwischen zwei Ereignissen zurückgelegt wird und/oder worden ist.

Die Laufwegindikation kann beispielsweise im Kommunikationssignal als eine Fließkommazahl und/oder als ein Integer enthalten sein.

Der Laufweg kann von der Reifendrucksensoranordnung bestimmt sein.

Beispielsweise kann der Laufweg basierend auf einer und/oder mehreren Drehwinkelpositionen des Rads ermittelt werden. Die Drehwinkelposition des Rads kann beispielsweise verstanden werden als eine Winkelstellung des Rads um die Radachse, an welcher das Rad gelagert ist. Beispielsweise kann jeder Drehwinkelposition des Rads eine Gradzahl zwischen 0° und 360° zugeordnet werden.

Die Drehwinkelposition des Rads kann mit einer Drehwinkelposition der Reifendrucksensoranordnung korrelieren und/oder mit ihr übereinstimmen. Die Reifendrucksensoranordnung ist insbesondere so an dem Rad angeordnet (insbesondere befestigt), dass sie der Drehung des Rads folgt. Es wurde erkannt, dass die Drehwinkelposition des Rads aus der Drehwinkelposition der Reifendrucksensoranordnung abgeleitet werden kann. Genauer kann die Drehwinkelposition des Rads stets mit der Drehwinkelposition der Reifendrucksensoranordnung zusammenfallen.

Beispielsweise kann die Laufwegindikation durch Summieren und/oder Integrieren des Drehwinkels bestimmt werden, insbesondere über eine Zeitspanne.

Die Laufwegindikation kann beispielsweise den Laufweg (z.B. des Rads) zum Zeitpunkt des Sendens des Kommunikationssignals repräsentieren. Beispielsweise kann ein Laufweg von der Laufwegindikation repräsentiert werden, den das Rad bis zum Senden des Kommunikationssignals zurückgelegt hat. Beispielsweise kann die Laufwegindikation einen Laufweg repräsentieren, den das Rad zumindest in einem Teil einer Zeitspanne ab dem Senden eines (z.B. unmittelbar) vorangehenden Kommunikationssignals bis zum Aussenden eines auf das vorangehende (z.B. unmittelbar) folgende Kommunikationssignals zurückgelegt hat.

Die Laufwegindikation kann beispielsweise zusätzlich und/oder alternativ eine Beschleunigung repräsentieren. Es wurde erkannt, dass aus einer Beschleunigung des Rads ein Laufweg des Rads, (beispielsweise mittels und/oder basierend auf einem Ableiten zumindest einer Drehwinkelposition) des Rads, abgeleitet werden kann. Beispielsweise kann die Beschleunigung des Rads eine Beschleunigung sein, welche auf die Reifendrucksensoranordnung wirkt und/oder von der Reifendrucksensoranordnung erfasst wird.

Das Senden des Kommunikationssignals kann beispielsweise mit dem Erfassen eines Innendrucks eines Reifens koordiniert sein. Beispielsweise kann für eine gegebene Erfassung eines Innendrucks ein zugeordnetes Senden des Kommunikationssignals vorgesehen werden. Beispielsweise kann in diesem Fall das Senden des Kommunikationssignals nach einem jeweiligen Erfassen des Innendrucks erfolgen. Damit kann das Kommunikationssignal in den im wesentlichen gleichen Intervallen gesendet werden, in denen der Innendruck erfasst wird. Das Senden des Kommunikationssignals kann zusätzlich oder alternativ unabhängig von dem Erfassen des Innendrucks sein. Beispielsweise kann das Senden des Kommunikationssignals erst nach Erfassen einer Mehrzahl von Innendrücken erfolgen. Das Erfassen kann also häufiger durchgeführt werden als das Senden. Beispielsweise kann nach dem Erfassen einer Mehrzahl von Innendrücken ein abgeleiteter Wert (siehe oben, Mittelwert oder andere) berechnet werden und danach einmalig gesendet werden. Auch kann das Senden mehrfach erfolgen, nach einem einzigen Erfassen des Innendrucks. Das Senden kann also häufiger durchgeführt werden als das Erfassen des Innendrucks.

Beispielsweise können für einen gegebenen (z.B. einzigen) erfassten Innendruck mehrere Kommunikationssignale versendet werden, die sich beispielsweise zumindest unter anderem durch eine von ihnen umfasste Laufwegindikation voneinander unterscheiden, allerdings jeweils den identischen Innendruck angeben.

Gemäß einem Ausführungsbeispiel des ersten Aspekts umfasst das Verfahren ferner Erfassen zumindest einer Beschleunigung.

Die Beschleunigung ist insbesondere eine Beschleunigung der Reifendrucksensoranordnung. Alternativ oder zusätzlich ist die Beschleunigung eine Beschleunigung des Rads. Die Beschleunigung kann insbesondere von einem Beschleunigungssensor der Reifendrucksensoranordnung erfasst werden.

Die Beschleunigung wird insbesondere entlang einer Erfassungsachse erfasst. Die Erfassungsachse ist insbesondere relativ zu der Reifendrucksensoranordnung fixiert. Die Erfassungsachse kann beispielsweise senkrecht zur Rotationsachse (und/oder Radachse) des Rads ausgerichtet sein. Alternativ oder zusätzlich kann die Erfassungsachse im Wesentlichen parallel zur Rotationsachse des Rads ausgerichtet sein.

Die Beschleunigung kann kontinuierlich und/oder in vordefinierten zeitlichen Abständen erfasst werden. Beispielsweise kann die Beschleunigung in zeitlichen Abständen von zumindest 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden. Beispielsweise kann die Beschleunigung in zeitlichen Abständen von höchstens 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden.

Die zumindest eine erfasste Beschleunigung kann einen momentanen Wert der Beschleunigung entlang zumindest einer Erfassungsachse umfassen. Möglich ist ebenfalls einer Zusammenfassung mehrerer erfasster Beschleunigungswerte, beispielsweise in Form eines Mittelwerts, Median, maximalen Werts, minimalen Werts und/oder Kombinationen hieraus. Beispielsweise kann die Beschleunigung über zumindest 2, 3, 4, 5 oder mehr voneinander unabhängig erfasste Beschleunigungswerte zusammenfassen.

Mittels der Beschleunigung kann unter anderem die (z.B. momentane) Drehrichtung des Rads und/oder der Reifendrucksensoranordnung, die (z.B. momentane) Drehgeschwindigkeit des Rads und/oder der Reifendrucksensoranordnung sowie die (z.B. momentane) Drehwinkelposition des Rads und/oder der Reifendrucksensoranordnung erfasst werden.

Typischerweise umfasst die Beschleunigung eine Überlagerung der (insbesondere konstanten) Erdbeschleunigung und einer Zentrifugalbeschleunigung durch die Radrotation, insbesondere wenn die Erfassungsachse, in welcher der Beschleunigungssensor eine Beschleunigung erfasst, im Wesentlichen senkrecht zur Rotationsachse des Rads ausgerichtet ist. Je nach Ausrichtung der Erfassungsachse, in welcher der Beschleunigungssensor eine Beschleunigung erfasst, können auch beispielsweise Beschleunigungen entlang der Rotationsachse des Rads detektiert werden. Eine Beschleunigung kann ebenfalls Hinweise auf mechanische Interaktionen des Rads und/oder des Reifens mit seiner Umgebung umfassen. Beispielsweise kann, insbesondere bei geeigneter Anordnung der Reifendrucksensoranordnung, welche den Beschleunigungssensor umfasst (beispielsweise am Reifen selbst) ein Bodenkontakt eines Bereichs des Rads und/oder Reifens, in welchem die Reifendrucksensoranordnung angeordnet ist, basierend auf der Beschleunigung, detektiert werden.

Eine Drehgeschwindigkeit des Rads und/oder der Reifendrucksensoranordnung kann beispielsweise aus einer von dem Beschleunigungssensor erfassten radialen Beschleunigung abgeleitet werden. Die radiale Beschleunigung kann insbesondere eine auf die Reifendrucksensoranordnung einwirkende Zentrifugalkraft widerspiegeln, welche mit der Drehgeschwindigkeit korreliert.

Gemäß einem Ausführungsbeispiel des ersten Aspekts werden mehrere Beschleunigungen in zumindest zwei oder drei verschiedenen Erfassungsachsen erfasst.

Die zumindest zwei oder drei verschiedenen Erfassungsachsen können beispielsweise, zumindest im Wesentlichen, senkrecht zueinander ausgerichtet sein. Beispielsweise kann eine der zumindest zwei und/oder zwei der zumindest zwei oder drei Erfassungsachsen im Wesentlichen senkrecht zur Rotationsachse des Rads ausgerichtet sein. Beispielsweise kann eine der zumindest zwei oder drei Erfassungsachsen, entlang derer die Beschleunigung(-en) erfasst werden, im Wesentlichen parallel zur Rotationsachse des Rads ausgerichtet sein. Eine im Wesentlichen parallel zur Rotationsachse erfasste Beschleunigung kann insbesondere als Querbeschleunigung bezeichnet werden. Eine im Wesentlichen senkrecht zur Rotationsachse erfasste Beschleunigung kann insbesondere als radiale Beschleunigung bezeichnet werden. Vorliegend können zwei voneinander verschiedene radiale Beschleunigungen in voneinander verschiedenen Erfassungsachsen (beispielsweise im Wesentlichen senkrecht zueinander) erfasst werden, sowie beispielsweise eine Querbeschleunigung. Die Reifendrucksensoranordnung kann in geeigneter Weise an dem Rad angeordnet sein, sodass zumindest ein Teil der Ausrichtung der Erfassungsachsen, in denen die Beschleunigung erfasst wird, in Relation zur Rotationsachse erreicht wird.

Wenn zwei Achsen zueinander im Wesentlichen senkrecht ausgerichtet sind, kann hiermit insbesondere gemeint sein, dass zwischen ihnen ein Winkel eingeschlossen ist, welcher von 90° um höchstens 1°, 2°, 5°, 10° oder 15° abweicht.

Wenn zwei Achsen (beispielsweise Erfassungsachse zu Rotationsachse oder zu Radachse) zueinander im Wesentlichen parallel ausgerichtet sind, kann hiermit insbesondere gemeint sein, dass zwischen ihnen ein Winkel eingeschlossen ist, welcher von 0° um höchstens 1°, 2°, 5°, 10° oder 15° abweicht.

Gemäß einem Ausführungsbeispiel des ersten Aspekts basiert die Laufwegindikation auf der zumindest einen erfassten Beschleunigung.

Aus der zumindest einen erfassten Beschleunigung kann zumindest eine oder mehrere Drehwinkelpositionen des Rads und/oder der Reifendrucksensoranordnung bestimmt und/oder abgeleitet werden. Durch Erfassen einer Beschleunigung kann folglich auch die Laufwegindikation erhalten werden. Beispielsweise kann hierfür eine Differenz zwischen zumindest zwei Drehwinkelpositionen herangezogen werden. Beispielsweise kann der Laufweg als eine Summe aus Differenzen zwischen jeweils (z.B. zeitlich, z.B. unmittelbar, ohne weitere dazwischenliegende Drehwinkelpositionen) aufeinanderfolgenden und/oder aufeinanderfolgend erfassten Drehwinkelpositionen bestimmt werden.

Die Laufwegindikation, welche in dem Kommunikationssignal gesendet wird, kann damit von dem Erfassen einer Beschleunigung abhängen. Die hierfür verwendete erfasste Beschleunigung kann beispielsweise im Zeitpunkt des Sendens und/oder (beispielsweise kurz) vor dem Senden erfasst werden. Beispielsweise kann zwischen dem Erfassen der Beschleunigung und dem Senden eine Zeit von weniger als 100µs, 200µs, 500µs, 1ms, 2ms, 5ms, 10ms, 50ms, 100ms, 200ms, 500ms, 1s oder 2s liegen. Beispielsweise kann zwischen dem Erfassen der Beschleunigung und dem Senden stets eine vordefinierte Zeitspanne gewartet werden, wobei die vordefinierte Zeitspanne beispielsweise der Zeit entspricht, die das Rad für eine oder mehr (z.B. vollständige) Rotationen benötigt.

Die Laufwegindikation kann beispielsweise unter anderem auf der Beschleunigung basieren. Beispielsweise kann die Laufwegindikation zusätzlich auf einer Zeitinformation und/oder der Drehrichtung und/oder der Drehgeschwindigkeit basieren. Alternativ oder zusätzlich kann die Laufwegindikation eine Zeitinformation und/oder Drehrichtung und/oder Drehgeschwindigkeit umfassen. Beispielsweise kann die Laufwegindikation einen Zeitraum zwischen dem Erfassen der Beschleunigung und dem Senden umfassen und/oder auf diesem basieren.

Beispielsweise können während eines Zeitraums und/oder zwischen zwei Ereignissen (währenddessen und/oder zwischen denen ein Laufweg zurückgelegt und/oder erfasst wird) eine oder mehrere, beispielswiese zumindest 2, 3, 4, 5, 6, 7, 8, 9, 10, 15, 20, 25, 30, 40, 50, 60, 80, 100, 150, 200 oder mehr Beschleunigungen erfasst (jeweils in zumindest einer und/oder zumindest zwei oder drei Erfassungsachsen). Die Laufwinkelindikation kann beispielsweise zumindest zwei oder mehr der während des Zeitraums erfassten Beschleunigungen umfassen. Aus den jeweiligen Beschleunigungen können jeweilige Drehwinkelpositionen abgeleitet werden, sodass sich ein während des Zeitraum zurückgelegter Laufweg aus ihnen ableiten lässt. Auch können alternativ oder zusätzlich aus den jeweiligen Beschleunigungen Momentanwerte der radialen Beschleunigung und/oder Erschütterungen abgeleitet werden, auf deren Basis sich das Durchlaufen einer vordefinierten Drehwinkelposition ableiten lässt.

Gemäß einem Ausführungsbeispiel des ersten Aspekts umfasst das Verfahren ferner
- Detektieren einer Kurvenfahrt des Fahrzeugs, insbesondere eines Beginns einer Kurvenfahrt und/oder eines Endes einer Kurvenfahrt und/oder einer Richtung der Kurvenfahrt.

Eine Kurvenfahrt eines Fahrzeugs liegt insbesondere dann vor, wenn das Fahrzeug nicht geradeaus fährt, sondern nach links oder nach rechts fährt. Üblicherweise bewegt sich das Fahrzeug während einer Kurvenfahrt im Wesentlichen entlang eines Kreisbogens mit einem Kurvenradius.

Ein Beginn einer Kurvenfahrt liegt beispielsweise dann vor, wenn das Fahrzeug von einer Geradeausfahrt abweicht. Beispielsweise kann die Geradeausfahrt vor Beginn der Kurvenfahrt über eine Mindestdauer angehalten haben, beispielsweise zumindest 1s, 5s, 10s, 30s, 1min, 2min, 5min, 10min oder mehr. Eine Abweichung von der Geradeausfahrt kann beispielsweise durch das Unterschreiten eines Kurvenradius definiert sein. Beispielsweise kann eine Kurvenfahrt dann beginnen und/oder vorliegen, wenn der Kurvenradius weniger als ein vordefinierter unterer Kurvenradiusschwellwert beträgt. Der untere Kurvenradiusschwellwert kann beispielsweise höchstens 500m, 400m, 300m, 200m, 100m, 90m, 80m, 70m, 60m, 50m, 40m, 30m, 20m, 10M oder 5m betragen.

Ein Ende einer Kurvenfahrt liegt beispielsweise dann vor, wenn das Fahrzeug von einer Kurvenfahrt abweicht, insbesondere von einer Kurvenfahrt in eine Geradeausfahrt übergeht. Beispielsweise kann die Kurvenfahrt vor Beginn der Geradeausfahrt über eine Mindestdauer angehalten haben, beispielsweise zumindest 1s, 5s, 10s, 30s, 1min, 2min, 5min, 10min oder mehr. Eine Abweichung von der Kurvenfahrt kann beispielsweise durch das Überschreiten eines Kurvenradius definiert sein. Beispielsweise kann eine Kurvenfahrt dann enden und/oder eine Geradeausfahrt vorliegen, wenn der Kurvenradius mehr als ein vordefinierter oberer Kurvenradiusschwellwert beträgt. Der obere Kurvenradiusschwellwert kann beispielsweise zumindest 500m, 400m, 300m, 200m, 100m, 90m, 80m, 70m, 60m, 50m, 40m, 30m, 20m, 10M oder 5m betragen. Der obere Kurvenradiusschwellwert kann größer sein als der untere Kurvenradiusschwellwert. Hierdurch wird eine Hysterese der Kurvenfahrtdetektion erreicht.

Alternativ oder zusätzlich kann eine Richtung der Kurvenfahrt bestimmt werden. Die Richtung kann insbesondere entweder einer Kurvenfahrt nach links oder nach rechts (z.B. in Fahrtrichtung) entsprechen.

Ferner kann eine Dauer der Kurvenfahrt bestimmt werden, beispielsweise als eine zeitliche Differenz zwischen dem Beginn der Kurvenfahrt und dem Ende der Kurvenfahrt.

Ein Beginn, ein Ende und/oder eine Richtung einer Kurvenfahrt kann auch durch ein (z.B. empfangenes, z.B. drahtlos empfangenes) Trigger-Signal angezeigt werden. Das Trigger-Signal kann beispielsweise von der Reifendrucksensoranordnung empfangen werden, beispielsweise von einer Vorrichtung, beispielsweise von einer Telematikeinheit (CTU). Hierfür kann die Reifendrucksensoranordnung zu einer bidirektionalen Kommunikation eingerichtet sein. Das Trigger-Signal kann auf einer Fahrzeugbeschleunigung basieren, welche außerhalb des Reifendrucksensors erfasst wird.

Gemäß einem Ausführungsbeispiel des ersten Aspekts
- basiert das Detektieren auf zumindest einer der zumindest einen erfassten Beschleunigung.

Die erfasste Beschleunigung kann insbesondere eine Querbeschleunigung sein, welche im Wesentlichen parallel zur Rotationsachse des Rads erfasst wird. Die Querbeschleunigung kann bei einer Geradeausfahrt im Wesentlichen 0G entsprechen, mit zufälligen Abweichungen beispielsweise unterhalb von 0,01G, 0,05G oder 0,1G. Beispielsweise kann für Querbeschleunigung, (z.B. betragsmäßig) oberhalb eines vordefinierten oberen Querbeschleunigungsschwellwerts, eine Kurvenfahrt (insbesondere der Beginn einer Kurvenfahrt) detektiert werden. Beispielsweise kann für Querbeschleunigungen, die (z.B. betragsmäßig) unterhalb eines vordefinierten unteren Querbeschleunigungsschwellwerts liegen, eine Geradeausfahrt (insbesondere der Beginn einer Geradeausfahrt/ Ende einer Kurvenfahrt) detektiert werden. Der obere Querbeschleunigungsschwellwert kann größer sein als der untere Querbeschleunigungsschwellwert. Hierdurch wird eine Hysterese der Kurvenfahrtdetektion erreicht. Ein unterer und/oder oberer Querbeschleunigungsschwellwert kann beispielsweise 0,1G, 0,2G, 0,3G, 0,5G, 0,6G, 0,7G, 0,8G, 0,9G, 1G oder höhere Beschleunigungswerten entsprechen. G steht für die Erdbeschleunigung von 9,81m/s^2. Der obere und/oder untere Querbeschleunigungsschwellwert kann abhängig von einer Geschwindigkeit des Fahrzeugs und/oder einer Drehgeschwindigkeit des Rads und/oder der Reifendrucksensoranordnung sein.

Beispielsweise kann die Richtung der Kurvenfahrt ebenfalls basierend auf der Beschleunigung detektiert werden. Beispielsweise kann ein Vorzeichen einer Querbeschleunigung (beispielsweise in Kombination mit einer Drehrichtung) als Basis zur Detektion der Richtung der Kurvenfahrt herangezogen werden.

Gemäß einem Ausführungsbeispiel des ersten Aspekts
- repräsentiert die Laufwegindikation einen von dem Rad zurückgelegten Laufweg während zumindest einer Kurvenfahrt.

Die Kurvenfahrt kann insbesondere eine (z.B. von der Reifendrucksensoranordnung) detektierte Kurvenfahrt sein. Beispielsweise kann die Reifendrucksensoranordnung mit einem Detektieren eines Beginns der Kurvenfahrt beginnen, den Laufweg einer Kurvenfahrt zu erfassen, und bei Detektieren des Endes der Kurvenfahrt das Erfassen des Laufwegs der Kurvenfahrt beenden.

Es wurde erkannt, dass basierend auf einem Laufweg, den ein Rad während einer Kurvenfahrt zurücklegt, eine Erkennung der Radposition des Rads (und/oder eines an dem Rad angeordneten Reifendrucksensors) ermöglicht werden kann. Denn die Räder verschiedener Radpositionen legen bei einer Kurvenfahrt des Fahrzeugs unterschiedliche Laufwege zurück.

Gemäß einem Ausführungsbeispiel des ersten Aspekts
- entspricht der Laufweg einer Differenz zwischen einer Anfangsdrehwinkelposition des Rads und einer Enddrehwinkelposition des Rads,
- wobei die Anfangsdrehwinkelposition einer Drehwinkelposition des Rads zu Beginn einer Kurvenfahrt entspricht und/oder
- wobei die Enddrehwinkelposition einer Drehwinkelposition des Rads am Ende einer Kurvenfahrt entspricht.

Die Differenz kann beispielsweise als Gradzahl angegeben werden und/oder als Anzahl von Umdrehungen und/oder als eine Strecke (z.B. in einer Längeneinheit wie z.B. Metern). Eine Differenz zwischen einer Anfangsdrehwinkelposition des Rads und einer Enddrehwinkelposition des Rads kann einen insgesamt zurückgelegten Drehwinkel des Rads umfassen und/oder insbesondere einen Teil einer oder mehr als eine volle Umdrehung des Rads betragen (beispielsweise mehr als 360°). Die Anfangs- und/oder Enddrehwinkelposition des Rads kann jeweils einen Wert von mehr als 360° umfassen. Beispielsweise kann eine Drehwinkelposition ausgehend von einem Startwert (beispielsweise der Anfangsdrehwinkelposition) aufsummiert werden, insbesondere während der Kurvenfahrt, insbesondere derart, dass die Enddrehwinkelposition auch mehr als 360° betragen kann.

Gemäß einem Ausführungsbeispiel des ersten Aspekts
- ist der Laufweg über zumindest zwei oder mehr Kurvenfahrten summiert,
   und/oder
- ist der Laufweg über zumindest zwei oder mehr Kurvenfahrten summiert, wobei die Kurvenfahrten jeweils die gleiche Richtung aufweisen.

Es wurde erkannt, dass Laufwegdifferenzen (z.B. bei ein und derselben Kurvenfahrt) zwischen verschiedenen Radpositionen existieren, diese allerdings insbesondere bei großen Kurvenradien gering sein können. Auch wurde erkannt, dass eine Kurvendetektion (beispielsweise basierend auf der Querbeschleunigung) für eine gegebene Kurvenfahrt fehlerhaft und/oder inkonsistent sein kann. Unter anderem können hierdurch verschiedene Reifendrucksensoranordnungen während einer (z.B. einzigen) Kurvenfahrt den Laufweg über voneinander unterschiedliche Zeiträume erfassen, sodass Laufwegdifferenzen verzerrt werden. So kann ein Vergleich mit einer Referenz und/oder unter den verschiedenen Reifendrucksensoranordnungen zu falschen Resultaten (z.B. Zuordnungen) führen. Laufwege, welche über eine einzige Kurvenfahrt erfasst werden, können folglich manchmal nur eine ungenügende Genauigkeit für eine Differenzierung der Radpositionen bereitstellen.

Demnach wird vorgeschlagen, Laufwege über mehrere Kurvenfahrten zu summieren. Beispielsweise können Laufwege auch gemittelt werden und/oder es können maximale und/oder minimale Laufwege (z.B. über mehrere Kurvenfahrten) bestimmt werden. Zumindest zwei Laufwege über zumindest zwei Kurvenfahrten können beispielsweise, unter anderem basierend auf einer Dauer der jeweiligen Kurvenfahrt (z.B. gewichtet und/oder normalisiert), summiert werden. Beispielsweise kann ein jeweiliger Laufweg zunächst durch die Dauer der jeweiligen Kurvenfahrt geteilt werden, um einen normalisierten Laufweg zu erhalten und unterschiedliche Dauern von Kurvenfahrten auszugleichen. Die normalisierten Laufwege können summiert werden. Beispielsweise kann die Summe erneut mit einer Dauer, beispielsweise der durchschnittlichen Dauer über die bei der Summierung betrachteten Kurvenfahrten, skaliert werden, um einen (z.B. von der Dauer unabhängigen) summierten Laufweg zu erhalten.

Insbesondere wurde erkannt, dass es vorteilhaft sein kann, Laufwege über solche Kurvenfahrten zu summieren, welche die jeweils gleiche Richtung (der Kurvenfahrt) aufweisen. Denn bei Kurvenfahrten in verschiedene Richtungen können sich Laufwegdifferenzen aufheben. Beispielsweise kann ein hinteres, linkes Rad eines Fahrzeugs bei Linkskurven einen kleineren Laufweg zurücklegen aber bei Rechtskurven einen größeren Laufweg als Räder an anderen Radpositionen. Summiert man Laufwege unterschiedlicher Kurvenrichtungen, können sich die Laufwege von Rechts- und Linkskurven gegenseitig ausgleichen. Ein Summieren über Kurven der gleichen Richtung ermöglicht eine konstruktive Addition der Laufwegsunterschiede.

Alternativ oder zusätzlich können (z.B. über mehrere Kurven der gleichen Richtung summierte) Laufwege einer der beiden Richtungen der Kurvenfahren von Laufwegen der anderen der beiden Richtungen der Kurvenfahrten subtrahiert werden.

Gemäß einem Ausführungsbeispiel des ersten Aspekts
- umfasst das Kommunikationssignal ferner eine Kurvenrichtungsindikation, wobei die Kurvenrichtungsindikation eine Richtung einer Kurvenfahrt repräsentiert, und/oder
- umfasst das Kommunikationssignal ferner eine Kurvenanzahlindikation, wobei die Kurvenanzahlindikation eine Anzahl von durchfahrenen Kurvenfahrten repräsentiert, und/oder
- umfasst das Kommunikationssignal ferner eine Drehgeschwindigkeitsindikation, wobei die Drehgeschwindigkeitsindikation eine Drehgeschwindigkeit des Rads repräsentiert, und/oder
- umfasst das Kommunikationssignal ferner eine Drehgeschwindigkeitsindikation, wobei die Drehgeschwindigkeitsindikation eine Drehgeschwindigkeit des Rads während einer Kurvenfahrt repräsentiert, und/oder
- umfasst das Kommunikationssignal ferner eine Drehrichtungsindikation, wobei die Drehrichtungsindikation eine Drehrichtung des Rads repräsentiert, und/oder
- umfasst das Kommunikationssignal ferner eine Identifikation der Reifendrucksensoranordnung und/oder
- umfasst das Kommunikationssignal ferner eine Zeitindikation, wobei die Zeitindikation der Laufwegindikation zugeordnet ist und/oder wobei die Zeitindikation eine Zeitdauer oder einen Zeitpunkt repräsentiert.

Eine Kurvenrichtungsindikation kann beispielsweise einen Beschleunigungswert, insbesondere einer erfassten Querbeschleunigung, umfassen. Auch kann die Kurvenrichtungsindikation ein Informationselement umfassen, dass die Kurvenrichtung angibt. Beispielsweise kann das Informationselement ein Bit (z.B. nur ein Bit, z.B. nur ein einzelnes Bit) umfassen.

Eine Kurvenanzahlindikation kann beispielsweise eine Anzahl von Kurven angeben, während derer ein (z.B. summierter) Laufweg zurückgelegt und/oder erfasst wurde. Das Kommunikationssignal kann ferner eine Drehgeschwindigkeitsindikation des Rads umfassen. Die Drehgeschwindigkeitsindikation repräsentiert die Drehgeschwindigkeit des Rads und/oder der Reifendrucksensoranordnung. Die Drehgeschwindigkeitsindikation kann die Drehgeschwindigkeit umfassen. Auch möglich ist, dass die Drehgeschwindigkeitsindikation (z.B. lediglich) ein Ableiten der Drehgeschwindigkeit ermöglicht. Beispielsweise kann die Drehgeschwindigkeitsindikation in diesem Fall eine Beschleunigung umfassen. Beispielsweise kann die Drehgeschwindigkeitsindikation einen erfassten Beschleunigungswert, insbesondere senkrecht zur Rotationsachse, umfassen.

Insbesondere kann die Drehgeschwindigkeitsindikation eine Geschwindigkeit (z.B. Drehgeschwindigkeit und/oder Fahrzeuggeschwindigkeit) während einer Kurvenfahrt angeben, insbesondere der Kurvenfahrt, während derer ein Laufweg zurückgelegt und/oder erfasst wurde.

Das Kommunikationssignal kann ferner eine Drehrichtungsindikation des Rads umfassen. Die Drehrichtungsindikation des Rads kann gleichermaßen eine Drehrichtungsindikation der Reifendrucksensoranordnung sein. Die Drehrichtungsindikation repräsentiert eine Drehrichtung des Rads und/oder der Reifendrucksensoranordnung bei Drehung um die Radachse, an welcher das Rad gelagert ist (auch mit Rotationsachse bezeichnet), insbesondere, während sich das Fahrzeug vorwärts bewegt. Die Drehrichtungsindikation versteht sich insbesondere nicht als eine Indikation der Drehrichtung senkrecht zur Rotationsachse, wie sie beispielsweise beim Lenken auftritt. Die Drehrichtungsindikation lässt einen Rückschluss darauf zu, ob sich das Rad in Vorwärtsfahrtrichtung auf der linken oder der rechten Seite des Fahrzeugs befindet. Die Drehrichtungsindikation kann beispielsweise eine Drehrichtung, insbesondere eine abgeleitete Drehrichtung, umfassen. Auch möglich ist, dass die Drehrichtungsindikation lediglich ein Ableiten der Drehrichtung ermöglicht, beispielsweise kann die Drehrichtungsindikation in diesem Fall eine Beschleunigung umfassen.

Eine Laufwegindikation, Drehwinkelindikation und/oder Drehgeschwindigkeitsindikation kann beispielsweise als ein Index zu einer Tabelle übermittelt werden. Beispielsweise kann lediglich eine begrenzte Anzahl von verschiedenen repräsentierten Werten vorgesehen sein, beispielsweise bis zu 2, 4, 8, 16, 32, 64, 128, 256, 512 oder 1024 Werte. Die jeweilige Indikation kann in diesem Falle beispielsweise als eine Abfolge von Bits repräsentiert werden und beispielsweise in dieser Form in dem Kommunikationssignal enthalten sein. Eine Drehrichtungsindikation kann beispielsweise durch ein einziges Bit repräsentiert werden.

Eine Identifikation der Reifendrucksensoranordnung kann beispielsweise dem Identifizieren der Reifendrucksensoranordnung dienen. Beispielsweise kann die Identifikation vordefiniert sein. Beispielsweise umfasst die Identifikation eine Identifikationsnummer, eine Zeichenfolge, einen Index und/oder Kombinationen hieraus. Die Identifikation kann beispielsweise eine eindeutige Kennung der Reifendrucksensoranordnung sein. D. h., dass die Identifikationen beliebiger zwei Reifendrucksensoranordnungen (z.B. an verschiedenen Radpositionen), insbesondere der Reifendrucksensoranordnungen, welche an einem Fahrzeug angeordnet sind, voneinander verschieden sind. Ausgehend von der Identifikation kann damit die Reifendrucksensoranordnung eindeutig identifiziert werden. Die Identifikation der Reifendrucksensoranordnung kann beispielsweise fest einprogrammiert sein, beispielsweise ab Herstellung zumindest einer Komponente der Reifendrucksensoranordnung. Alternativ oder zusätzlich kann die Identifikation der Reifendrucksensoranordnung veränderlich, insbesondere programmierbar sein. Beispielsweise wird die Identifikation der Reifendrucksensoranordnung in einem Konfigurationsprozess, beispielsweise beim Montieren der Reifendrucksensoranordnung am Fahrzeug, festgelegt.

Ferner kann das Kommunikationssignal eine Zeitindikation enthalten. Die Zeitindikation kann der Laufwegindikation zugeordnet sein. Beispielsweise kann die Zeitindikation für eine in dem Kommunikationssignal enthaltene Laufwegindikation gelten. Beispielsweise kann die Zeitindikation eine Zeitdauer oder einen Zeitpunkt repräsentieren. Beispielsweise kann die Zeitindikation eine Zeitspanne angeben, während derer das Rad den von der Laufwegindikation repräsentierten Laufweg zurückgelegt hat und/oder während derer der zurückgelegte Laufweg erfasst wurde. Beispielsweise kann die Zeitindikation einen Beginn, ein Ende und/oder eine Dauer einer Kurvenfahrt (z.B. der Kurvenfahrt, während derer der Laufweg zurückgelegt wurde) repräsentieren. Es wurde erkannt, dass ein Vergleich zwischen Laufwegen verschiedener Räder und/oder Reifendrucksensoranordnungen unter Berücksichtigung einer Zeitindikation besonders zuverlässig durchgeführt werden kann. Beispielsweise können zwischen Reifendrucksensoranordnungen Unterschiede in der Erkennung von Kurvenfahrten bestehen, sodass über unterschiedliche Zeitspannen ein jeweiliger Laufweg erfasst wird. Mithilfe der Zeitindikation, welche beispielsweise die jeweilige (z.B. erfasste) Dauer der Kurvenfahrt angibt, können die Laufwege trotz unterschiedlicher Erfassungszeiträume verglichen werden. Beispielsweise kann der jeweilige Laufweg (z.B. vor einem Vergleich) auf eine einheitliche Dauer (und/oder Zeitspanne) hoch- oder herunterskaliert werden, insbesondere linear.

Gemäß einem Ausführungsbeispiel des ersten Aspekts
- repräsentiert die Laufwegindikation die zumindest eine erfasste Beschleunigung,
   und/oder
- repräsentiert die Laufwegindikation eine zumindest teilweise basierend auf der zumindest einen erfassten Beschleunigung abgeleitete Drehwinkelposition.

Die Laufwegindikation kann beispielsweise die zumindest eine erfasste Beschleunigung repräsentieren. In diesem Falle ist es nicht notwendig, dass die Reifendrucksensoranordnung aus der erfassten Beschleunigung eine Drehwinkelposition/ einen Laufweg ableitet und/oder bestimmt. Stattdessen kann die erfasste Beschleunigung selbst übermittelt werden. Vorteilhaft hieran ist, dass weniger Verarbeitungsschritte von der Reifendrucksensoranordnung selbst ausgeführt werden müssen. Hierdurch bleibt der Energiebedarf der Reifendrucksensoranordnung gering, und eine maximale Betriebszeit der Reifendrucksensoranordnung kann bei einer gegebenen Menge von verfügbarer Energie (beispielsweise eines elektrischen Energiespeichers der Reifendrucksensoranordnung) besonders lang ausfallen.

Alternativ oder zusätzlich repräsentiert die Laufwegindikation einen, zumindest teilweise basierend auf der zumindest einen erfassten Beschleunigung, abgeleiteten Laufweg. In diesem Falle kann die Reifendrucksensoranordnung dazu eingerichtet sein, den Laufweg und/oder die Drehrichtung aus der Beschleunigung zu bestimmen und/oder abzuleiten. Vorteilhaft an dieser Ausgestaltung kann insbesondere sein, dass die abgeleitete und/oder bestimmte Laufwegindikation in kompakter Form gesendet werden kann. Während beispielsweise die Beschleunigung in mehreren Erfassungsachsen mit hinreichender Genauigkeit (und damit einhergehender Datenmenge) gesendet werden muss, kann die abgeleitete oder bestimmte Laufwegindikation als ein einzelner skalarer Wert gesendet werden. Hierdurch verringert sich der Kommunikationsaufwand, was mit einer Energieersparnis aber auch einer kürzeren Sendezeit der Reifendrucksensoranordnung einhergeht.

Gemäß einem Ausführungsbeispiel des ersten Aspekts umfasst das Verfahren ferner
- Bestimmen und/oder Ableiten der Laufwegindikation basierend auf der zumindest einen erfassten Beschleunigung, und/oder
- Bestimmen und/oder Ableiten der Laufwegindikation basierend auf der zumindest einen erfassten Beschleunigung
   - wobei das Bestimmen und/oder Ableiten der Laufwegindikation abhängig ist von einer Drehgeschwindigkeitsindikation des Rads und/oder
   - wobei das Bestimmen und/oder Ableiten der Laufwegindikation abhängig ist von einer Drehrichtungsindikation des Rads und/oder
   - wobei das Bestimmen und/oder Ableiten der Laufwegindikation abhängig ist von einer Kurvenfahrt, insbesondere von dem Detektieren eines Beginns einer Kurvenfahrt und/oder eines Endes einer Kurvenfahrt und/oder einer Richtung der Kurvenfahrt, und/oder
- Bestimmen und/oder Ableiten, aus der zumindest einen erfassten Beschleunigung, einer Drehwinkelindikation, einer Drehrichtungsindikation und/oder einer Drehgeschwindigkeitsindikation.

Das Verfahren, welches von der Reifendrucksensoranordnung ausgeführt wird, kann das Bestimmen und/oder Ableiten der Laufwegindikation aus der zumindest einen erfassten Beschleunigung umfassen. Beispielsweise kann aus der Beschleunigung eine momentane Drehwinkelposition des Rades und/oder der Reifendrucksensoranordnung bestimmt werden. Aus zumindest zwei oder mehr solcher Drehwinkelpositionen kann ein Laufweg bestimmt werden. Beispielsweise kann sichergestellt werden, dass zwischen dem Erfassen zweier Drehwinkelpositionen nicht mehr als eine vollständige Umdrehung des Rades stattfindet. Anders gesagt kann die zumindest eine Beschleunigung zumindest einmal pro Umdrehung erfasst werden. Vorzugsweise verstreicht weniger als eine Umdrehung des Rads zwischen zwei aufeinanderfolgenden Erfassungen der Beschleunigung. Ein Intervall, in welchem die Beschleunigung erfasst wird, kann entsprechend (beispielsweise dynamisch, beispielsweise abhängig von der Drehgeschwindigkeit) angepasst werden.

Alternativ oder zusätzlich kann der Laufweg und/oder die Laufwegindikation auch ohne Bestimmung der Drehwinkelposition des Rads bestimmt werden. Beispielsweise kann eine (z.B. vollständig) Umdrehung des Rads durch Detektion eines Ereignisses erkannt werden, welches einmal pro Umdrehung eintritt. Das Ereignis kann beispielsweise ein Bodenkontakt eines Bereichs des Rads und/oder Reifens sein, in welchem die Reifendrucksensoranordnung angeordnet ist. Der Bodenkontakt kann beispielsweise anhand einer Erschütterung abgeleitet werden, welche basierend auf der Beschleunigung detektiert wird. Aus der Anzahl derartiger detektierter Bodenkontakte kann der Laufweg abgeleitet/bestimmt werden. Auch kann das (zyklische) detektierte Ereignis eine maximale radiale Beschleunigung sein, welche sich ergibt, wenn sich Zentrifugalkraft und Erdbeschleunigung konstruktiv überlagern.

Beispielsweise kann das Bestimmen und/oder Ableiten der Laufwegindikation abhängig von einer Drehgeschwindigkeit sein. Beispielsweise kann das Bestimmen und/oder Ableiten der Laufwegindikation auf Drehgeschwindigkeiten unterhalb eines unteren Drehgeschwindigkeitsschwellwerts beschränkt sein. Es wurde erkannt, dass Unterschiede zwischen Laufwegen unterschiedlicher Radpositionen besonders groß ausfallen, wenn die Geschwindigkeit des Fahrzeugs niedrig ist. Beispielsweise kann dies an niedrigen Kurvenradien liegen. Der untere Drehgeschwindigkeitsschwellwert kann beispielsweise höchstens 5 km/h, 10 km/h, 15 km/h, 20 km/h, 25 km/h, 30 km/h, 40 km/h, 50 km/h, 60 km/h, 70 km/h, 80 km/h oder 100 km/h betragen.

Beispielsweise kann das Bestimmen und/oder Ableiten der Laufwegindikation abhängig von einer Drehrichtung sein. Beispielsweise kann die Laufwegindikation nur bei einer Vorwärtsfahrt des Fahrzeugs bestimmt und/oder abgeleitet werden.

Ferner kann das Bestimmen und/oder Ableiten der Laufwegindikation abhängig von einer Kurvenfahrt sein, insbesondere von dem Detektieren eines Beginns einer Kurvenfahrt und/oder eines Endes einer Kurvenfahrt und/oder einer Richtung der Kurvenfahrt. Die Kurvenfahrt und/oder ihr Beginn, Ende oder Richtung kann insbesondere basierend auf der zumindest einen erfassten Beschleunigung bestimmt werden. Das Bestimmen und/oder Ableiten der Laufwegindikation kann auf Kurvenfahrten beschränkt sein, beispielsweise auf Kurvenfahrten einer Kurvenrichtung. Insbesondere kann während Geradeausfahrten des Fahrzeugs ein Bestimmen und/oder Ableiten der Laufwegindikation unterbunden werden.

Das Verfahren kann ferner ein Ableiten und/oder Bestimmen einer Drehwinkelposition des Rads, einer Drehrichtung des Rads und/oder einer Drehgeschwindigkeit des Rads aus der Drehwinkelindikation aus der zumindest einen erfassten Beschleunigung umfassen. Der Laufweg kann insbesondere (z.B. direkt) aus der zumindest einen erfassten Beschleunigung abgeleitet und/oder bestimmt werden und/oder über eine oder mehrere Drehwinkelpositionen, welche ihrerseits aus der erfassten Beschleunigung abgeleitet und/oder bestimmt werden.

Die Drehwinkelposition des Rads, die Drehrichtung des Rads und/oder die Drehgeschwindigkeit des Rads kann insbesondere jeweils mit der Drehwinkelposition der Reifendrucksensoranordnung, einer Drehrichtung der Reifendrucksensoranordnung und/oder einer Drehgeschwindigkeit der Reifendrucksensoranordnung übereinstimmen. Die zumindest eine erfasste Beschleunigung, insbesondere soweit diese senkrecht zur Rotationsachse des Rads erfasst wird, ist zumindest teilweise von der Erdbeschleunigung abhängig. Eine Drehwinkelposition kann damit aus der zumindest einen erfassten Beschleunigung abgeleitet und/oder bestimmt werden. Beispielsweise kann ausgehend von dem Betrag und dem Vorzeichen der zumindest einen erfassten Beschleunigung abgeleitet werden, welcher Winkel zwischen der Erfassungsachse, in welcher die zumindest eine erfasste Beschleunigung erfasst wird, und einem Erdbeschleunigungsvektor, welcher zum Zentrum des Planeten ausgerichtet ist, auf welchem sich das Fahrzeug befindet, bestimmt werden. Dieser Winkel (beispielsweise plus einem konstanten Offset-Winkel) kann als die Drehwinkelposition betrachtet werden.

Falls sich das Rad in Rotation befindet, ist die Erdbeschleunigung überlagert von einer Zentrifugalbeschleunigung. Falls die Erfassungsachse, in welcher der Beschleunigungssensor die zumindest eine erfasste Beschleunigung erfasst, senkrecht zur Rotationsachse des Rads ausgerichtet ist, ist die erfasste Zentrifugalbeschleunigung bei konstanter Geschwindigkeit (z.B. Drehgeschwindigkeit und/oder Fahrzeuggeschwindigkeit) in etwa konstant über die Zeit. Somit kann, in einer einfachen Ausgestaltung, von der erfassten Beschleunigung die konstante Zentrifugalbeschleunigung abgezogen werden und somit die von der Erdbeschleunigung hervorgerufene Komponente der zumindest einen erfassten Beschleunigung isoliert werden. Beispielsweise kann die Zentrifugalbeschleunigung als der Mittelwert der zumindest einen erfassten Beschleunigung über eine Umdrehung des Rads und/oder über eine vordefinierte Zeitspanne bestimmt werden.

Zur Bestimmung und/oder Erfassung der Drehwinkelposition aus der zumindest einen erfassten Beschleunigung können zumindest zwei voneinander verschiedene Erfassungsachsen notwendig sein, in welchen die Beschleunigung erfasst wird. Die beiden Erfassungsachsen sind hierbei zumindest teilweise senkrecht zur Rotationsachse des Rads ausgerichtet und in Projektion entlang der Rotationsachse voneinander verschieden. Alternativ ist es möglich, die Beschleunigungen lediglich in einer Erfassungsachse senkrecht zur Rotationsachse zu erfassen und hieraus die Drehwinkelposition abzuleiten. Beispielsweise kann hierbei, neben einer skalaren Beschleunigung, eine Drehrichtungsinformationen des Rads hinzugenommen werden, um die Drehwinkelposition abzuleiten und/oder zu bestimmen.

Beispielsweise kann das Senden des Kommunikationssignals von der abgeleiteten Drehgeschwindigkeit abhängig sein. Beispielsweise kann das Senden nur bei Drehgeschwindigkeiten oberhalb einer vordefinierten Mindestdrehgeschwindigkeit durchgeführt werden. Im Stillstand könnten sich andere Fahrzeuge in der Nähe des Fahrzeugs befinden, welche die gesendeten Kommunikationssignale empfangen könnten. Fehlzuordnungen können die Folge sein. Durch ein Senden oberhalb der vordefinierten Mindestdrehgeschwindigkeit ist dieses Risiko geringer.

Auch die Drehrichtung des Rads und/oder der Reifendrucksensoranordnung kann aus der zumindest einen erfassten Beschleunigung abgeleitet und/oder bestimmt werden. Hierbei kann ebenfalls die von der Erdbeschleunigung verursachte Beschleunigungskomponente in einer Erfassungsachse und/oder insbesondere in zwei Erfassungsachsen, in welchen die Beschleunigung erfasst wird, betrachtet werden. Die zwei Erfassungsachsen können beispielsweise im Wesentlichen senkrecht zueinander und jeweils im Wesentlichen senkrecht zur Rotationsachse ausgerichtet sein. Die Drehrichtung kann beispielsweise unter Kenntnis eines Winkels zwischen den zumindest zwei Erfassungsachsen, in welchen die Beschleunigung erfasst wird, abgeleitet und/oder bestimmt werden.

Schließlich kann auch eine Drehgeschwindigkeit des Rads und/oder der Reifendrucksensoranordnung, basierend auf der zumindest einen erfassten Beschleunigung, abgeleitet und/oder bestimmt werden. Auch die Geschwindigkeit des Fahrzeugs kann auf diese Art, beispielsweise unter Berücksichtigung des Reifenumfangs, abgeleitet und/oder bestimmt werden. Hierbei kann beispielsweise, zusätzlich zu der Beschleunigung, eine Zeitinformation herangezogen werden. Beispielsweise kann die Zeitspanne zwischen zwei Ereignissen gemessen werden, wobei die Ereignisse jeweils einmal pro Umdrehung auftreten. Das Ereignis kann beispielsweise ein aus der Beschleunigung abgeleitete Kontakt eines Bereichs des Rads/Reifens, in welchem die Reifendrucksensoranordnung angeordnet ist, mit dem Boden umfassen. Beispielsweise kann das Ereignis in diesem Fall eine Erschütterung sein. Auch kann als das Ereignis das Erreichen eines betragsmäßig maximalen (beispielsweise positiven und/oder negativen) Beschleunigungswerts angenommen werden. Die Drehgeschwindigkeit kann insbesondere unter Heranziehung einer Beschleunigung entlang einer einzigen Erfassungsachse bestimmt und/oder abgeleitet werden.

Gemäß einem Ausführungsbeispiel des ersten Aspekts
- ist das Senden abhängig von einer Kurvenfahrt, insbesondere von dem Detektieren eines Beginns der Kurvenfahrt und/oder eines Endes der Kurvenfahrt und/oder einer Richtung der Kurvenfahrt.

Beispielsweise kann das Kommunikationssignal bei Beginn und/oder Ende und/oder während einer Kurvenfahrt gesendet werden.

Gemäß einem zweiten Aspekt der Erfindung wird eine Reifendrucksensoranordnung für Fahrzeuge, insbesondere Nutzfahrzeuge, vorgeschlagen, umfassend einen Drucksensor und Mittel, die dazu eingerichtet sind, das Verfahren gemäß dem ersten Aspekt auszuführen und/oder zu steuern.

Die Reifendrucksensoranordnung gemäß dem zweiten Aspekt ist insbesondere dazu geeignet, an dem Rads eines Fahrzeugs angeordnet, insbesondere an dem Rad befestigt, zu werden. Beispielsweise kann die Reifendrucksensoranordnung ein Befestigungsmittel umfassen und/oder dazu eingerichtet sein, mittels eines Befestigungsmittels an dem Rad befestigt zu werden. Beispielsweise können die Befestigungsmittel an einem Gehäuse der Reifendrucksensoranordnung angeordnet sein.

Beispielsweise kann die Reifendrucksensoranordnung an der Felge des Rads angeordnet werden, beispielsweise mit einem Spanngurt um die Felge gespannt werden. Auch eignet sich die Umgebung eines Ventils des Rads zur Befestigung der Reifendrucksensoranordnung. Die Reifendrucksensoranordnungen kann beispielsweise im Innenraum des Reifens in der Nähe des Ventils, beispielsweise mit dem Ventil verbunden, angeordnet sein. Alternativ kann die Reifendrucksensoranordnung außen an der Felge im Bereich des Ventils angeordnet sein. In diesem Fall muss eine fluidische Verbindung zwischen dem Reifendrucksensor und einem Innenraum des Ventils, welcher mit dem Innenraum des Reifens verbunden ist, vorgesehen werden. Eine fluidische Verbindung ist insbesondere eine gasdurchlässige Verbindung, welche einen Druckausgleich zwischen den durch die fluidische Verbindung verbundenen Volumina zulässt. Auch möglich ist es, die Reifendrucksensoranordnung mit einem flexiblen Befestigungselement, beispielsweise einem Band, lose mit der Felge und/oder dem Reifen zu verbinden, sodass die Reifendrucksensoranordnung bei Rotation des Rads durch die auf die Reifendrucksensoranordnung einwirkende Zentrifugalkraft in den Zwischenraum zwischen dem Reifen und der Felge gehoben wird, und durch das flexible Befestigungselement gehalten wird. Alternativ oder zusätzlich kann die Reifendrucksensoranordnung an dem Reifen angeordnet sein. Beispielsweise kann die Reifendrucksensoranordnung an eine Innenwand des Reifens anvulkanisiert werden.

Die Reifendrucksensoranordnung umfasst einen Drucksensor. Der Drucksensor kann beispielsweise kapazitiv, induktiv, piezoelektrisch und/oder piezoresistiv aufgebaut sein. Der Drucksensor ist fluidisch mit einem Innenraum des Reifens verbunden. Beispielsweise ist der Drucksensor an einem Außenbereich der Reifendrucksensoranordnung angebracht. Auch möglich ist, ein Gehäuse der Reifendrucksensoranordnung zumindest mit einer Öffnung zu versehen, mittels derer ein Druckausgleich zwischen einem Innenraum des Gehäuses und dem Innenraum des Reifens hergestellt werden kann.

Die Reifendrucksensoranordnung kann insbesondere zumindest zwei oder mehr Drucksensoren umfassen. Hierdurch kann eine Redundanz geschaffen werden, was eine Ausfallwahrscheinlichkeit der Reifendrucksensoranordnung reduziert. Gleichzeitig kann die Messgenauigkeit erhöht werden.

Die Mittel zur Ausführung des Verfahrens gemäß des ersten Aspekts können beispielsweise Rechenmittel umfassen. Rechenmittel können beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Rechenmittel Instruktionen umfassen, welche, wenn sie von dem zumindest einen Rechenmittel ausgeführt werden, die Reifendrucksensoranordnung dazu veranlassen, das Verfahren gemäß dem ersten Aspekt auszuführen und/oder zu steuern. Beispielsweise können hierfür funktionale Einheiten vorgesehen sein, welche die Schritte des Verfahrens steuern und/oder ausführen. Eine funktionale Einheit kann beispielsweise mit Instruktionen korrespondieren, welche die Steuerung und/oder Ausführung der jeweiligen Schritte des Verfahrens bewirken. Alternativ oder zusätzlich kann eine funktionale Einheit eine Verschaltung eines programmierten FPGA, ein Teilbereich eines ASIC und/oder Kombinationen hieraus sein.

Die Reifendrucksensoranordnung kann ferner zumindest einen Energiespeicher umfassen, beispielsweise eine Batterie und/oder einen Akkumulator. Beispielsweise kann der Energiespeicher wiederaufladbar sein.

Die Reifendrucksensoranordnung kann ferner ein Zeiterfassungsmittel umfassen, welches die Erfassung verstrichener Zeitspannen erlaubt. Insbesondere kann das Zeiterfassungsmittel zur Erfassung, Bestimmung und/oder Ableitung der Zeitindikation eingerichtet sind. Beispielsweise kann das Zeiterfassungsmittel ein Timer (beispielsweise eine Microcontrollers) sein, beispielsweise basierend auf einem Quarz.

Die Reifendrucksensoranordnung ist insbesondere dazu eingerichtet, den Reifendruck des Rades zu erfassen, an welchem die Reifendrucksensoranordnung angeordnet ist.

Gemäß einem Ausführungsbeispiel des zweiten Aspekts
- ist der Drucksensor für das Erfassen des Innendrucks eines Reifens eines Rads eingerichtet.

Der Drucksensor kann, in den im Hinblick auf das Verfahren gemäß dem ersten Aspekt offenbarten Vorgehensweisen, den Innendruck eines Reifens eines Rads erfassen. Insbesondere kann der Drucksensor den Innendruck des Reifens des Rads erfassen, an dem die Reifendrucksensoranordnung angeordnet ist.

Gemäß einem Ausführungsbeispiel des zweiten Aspekts
- umfasst die Reifendrucksensoranordnung ein Kommunikationsmittel, wobei das Kommunikationsmittel für das Senden des Kommunikationssignals eingerichtet ist.

Das Kommunikationsmittel kann beispielsweise mit den Mitteln, beispielsweise mit einem Rechenmittel, der Reifendrucksensoranordnung verbunden sein, beispielsweise durch eine Kommunikationsverbindung, insbesondere durch eine drahtgebundene Kommunikationsverbindung.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen aussenden kann. Das Kommunikationsmittel kann beispielsweise dazu eingerichtet sein, auf einer Trägerfrequenz ein Signal (beispielsweise das Kommunikationssignal) aufzumodulieren. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten auszusenden. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, eine paketbasierte Übermittlung von Daten zu ermöglichen.

Beispielsweise kann das das Kommunikationsmittel zu einem drahtlosen und unidirektionalen Senden eingerichtet sein. Beispielsweise kann das Kommunikationsmittel dazu eingerichtet sein, das Kommunikationssignal in Form eines Broadcasts aussenden. Das Kommunikationssignal und/oder das Senden des Kommunikationssignals kann hierbei nicht spezifisch für einen Empfänger sein, sondern unspezifisch. Das Senden kann unabhängig von einer Rückmeldung des Empfängers zu der Sendung sein. Alternativ kann das Kommunikationsmittel zu einer bidirektionalen Kommunikation eingerichtet sein. In diesem Fall ist das Kommunikationsmittel in der Lage, sowohl zu senden (insbesondere das Kommunikationssignal), als auch zu empfangen, beispielsweise eine Empfangsbestätigung des Empfängers zu dem ausgesendeten Kommunikationssignal.

Gemäß einem Ausführungsbeispiel des zweiten Aspekts umfasst die Reifendrucksensoranordnung
- einen Beschleunigungssensor, wobei der Beschleunigungssensor dazu eingerichtet ist, die zumindest eine Beschleunigung zu erfassen.

Die in Hinblick auf das Verfahren gemäß des ersten Aspekts offenbarten Erfassungsweisen sind hiermit ebenfalls für die Reifendrucksensoranordnung offenbart.

Der Beschleunigungssensor ist insbesondere dazu eingerichtet, eine, zwei oder drei Beschleunigungen zu erfassen, insbesondere in jeweils voneinander verschiedenen Erfassungsachsen.

Beispielsweise kann der Beschleunigungssensor sich in zumindest zwei einzelne Unterbeschleunigungssensoren aufteilen. Ein erster Unterbeschleunigungssensor kann beispielsweise in einer oder zwei oder drei Erfassungsachsen eine Beschleunigung erfassen. Beispielsweise kann der erste Unterbeschleunigungssensor mit dem Drucksensor integriert sein und eine erste Beschleunigung entlang einer ersten Erfassungsachse erfassen, während darüber hinaus ein zweiter Unterbeschleunigungssensor getrennt von dem Drucksensor vorgesehen ist. Der zweite Unterbeschleunigungssensor kann dazu eingerichtet sein, eine Beschleunigung in mindestens einer weiteren Erfassungsachse, welche sich von der ersten Erfassungsachse unterscheidet, zu erfassen. Auch möglich ist es, dass der zweite Unterbeschleunigungssensor zwei und/oder drei Beschleunigungen erfasst. Durch das Vorsehen eines weiteren Unterbeschleunigungssensors, zusätzlich zu einem bereits in dem Drucksensor integrierten Beschleunigungssensor, kann besonders platzsparend und günstig eine weitere Erfassungsachse, in welcher eine Beschleunigung erfasst wird, bereitgestellt werden, wodurch sich die Drehrichtung und die Drehwinkelposition ableiten und/oder bestimmen lässt.

Die Ausrichtung von zumindest zwei oder drei Erfassungsachsen, in welchen eine jeweilige Beschleunigung erfasst wird, ist insbesondere so gewählt, dass zumindest eine oder zwei in einer Einbauposition der Reifendrucksensoranordnung im Wesentlichen senkrecht zur Rotationsachse des Rads ausgerichtet sind während eine im Wesentlichen parallel zur Rotationsachse des Rads ausgerichtet ist.

Gemäß einem Ausführungsbeispiel des zweiten Aspekts umfasst die Reifendrucksensoranordnung ferner
- ein Ableitungs- und/oder Bestimmungsmittel, wobei das Ableitungs- und/oder Bestimmungsmittel für die Ableitung des Laufwegs, einer Kurvenfahrt, insbesondere eines Beginns einer Kurvenfahrt und/oder eines Endes einer Kurvenfahrt und/oder einer Richtung einer Kurvenfahrt, einer Anzahl von Kurvenfahrten, einer Drehwinkelposition, insbesondere einer Enddrehwinkelposition und/oder einer Anfangsdrehwinkelposition, einer Drehrichtung und/oder einer Drehgeschwindigkeit eingerichtet ist.

Das Ableitung- und/oder Bestimmungsmitteln kann insbesondere ein Rechenmittel sein. Das Rechenmittel kann beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Mittel Instruktionen umfassen, welche, wenn sie von den zumindest einen Rechenmittel ausgeführt werden, die Reifendrucksensoranordnung dazu veranlassen, die Drehwinkelposition, die Drehrichtung und/oder die Drehgeschwindigkeit abzuleiten und/oder zu bestimmen. Beispielsweise kann das Ableiten und/oder Bestimmen auf der zumindest einen erfassten Beschleunigung basieren.

Die Ableitung und/oder Bestimmung der jeweiligen Größe kann wie in der in Hinblick auf den ersten Aspekt offenbarten Art und Weise erfolgen.

Gemäß einem dritten Aspekt der Erfindung wird ein Verfahren zur Reifendrucküberwachung eines Fahrzeugs, insbesondere Nutzfahrzeugs, ausgeführt durch eine Vorrichtung, vorgeschlagen, umfassend
- Empfangen eines Kommunikationssignals, umfassend eine Reifendruckindikation eines Reifens eines Rads und eine Laufwegindikation des Rads, von einer Reifendrucksensoranordnung, und
- Zuordnen einer Radposition zu der Reifendrucksensoranordnung, zumindest basierend auf der Laufwegindikation.

Die Vorrichtung kann beispielsweise eine Steuerungseinheit eines (des) Fahrzeugs sein, beispielsweise eine Telematikeinheit (CTU).

Das vorgeschlagene Verfahren umfasst das Empfangen eines Kommunikationssignals durch eine Vorrichtung. Auch können mehrere Kommunikationssignale empfangen werden, beispielsweise zeitlich nacheinander. Beispielsweise wird das Kommunikationssignal von einem Kommunikationsmittel der Vorrichtung empfangen. Das Kommunikationssignal kann beispielsweise als Kommunikationssignal gemäß dem ersten und zweiten Aspekt der Erfindung ausgestaltet sein. Insbesondere kann das Kommunikationssignal von einer Reifendrucksensoranordnung empfangen werden, insbesondere einer Reifendrucksensoranordnung gemäß dem zweiten Aspekt.

Beispielsweise kann jeweils zumindest ein oder mehr Kommunikationssignale von zumindest zwei oder mehr Reifendrucksensoranordnungen empfangen werden. Weiterhin umfasst das Verfahren das Zuordnen einer Radposition zu der Reifendrucksensoranordnung (z.B. von der das Kommunikationssignal empfangen wurden), zumindest basierend auf der Laufwegindikation.

Da der Laufweg charakteristisch für eine gegebene Radposition ist, kann eine Zuordnung zwischen der Reifendrucksensoranordnung, von der das Kommunikationssignal, umfassend die Laufwegindikation empfangen wurde, und einer Radposition, basierend auf dem Laufweg, vorgenommen werden. Beispielsweise kann hierfür ein Modell des maschinellen Lernens trainiert werden, welches Laufwege als Eingangsgrößen akzeptiert und diesen die wahrscheinlichste Radposition als Ausgangsgröße zuordnet. Das Modell des maschinellen Lernens kann beispielsweise eine Support Vektor Maschine (SVM), ein neuronales Netz (z.B. Perzeptron oder tiefes neuronales Netzwerk), ein k-Nearest-Neighbor (kNN) Modell und/oder Kombinationen hieraus sein.

Beispielsweise kann zumindest eine der Reifendrucksensoranordnungen, von denen zumindest ein Kommunikationssignal empfangen wurde, einer Radposition zugeordnet werden. Alternativ können alle Reifendrucksensoranordnungen, von denen Kommunikationssignale empfangen wurden, jeweils einer Radposition zugeordnet werden.

Beispielsweise kann pro Reifendrucksensoranordnung eine Mindestanzahl von empfangenen Kommunikationssignalen erfasst werden, bis eine Zuordnung vorgenommen wird. Die Mindestanzahl kann beispielsweise 10, 50, 100, 500, 1000 oder mehr empfangene Kommunikationssignale betragen.

Gemäß einem Ausführungsbeispiel des dritten Aspekts umfasst das Verfahren
- Bestimmen und/oder Ableiten eines Laufwegs des Rads aus der Laufwegindikation.

Beispielsweise kann aus einer Beschleunigung, welche von der Laufwegindikation repräsentiert wird, ein Laufweg abgeleitet und/oder bestimmt werden. Die Laufwegindikation kann beispielsweise einen Index zu einer Tabelle von Laufwegen beinhalten, wobei das Bestimmen und/oder Ableiten ein Abrufen der Tabelle an dem Index beinhaltet. Die Laufwegindikation kann auch den Laufweg an sich beinhalten, beispielsweise sodass als Bestimmen und/oder Ableiten ein Auslesen der Laufwegindikation reicht.

Gemäß einem Ausführungsbeispiel des dritten Aspekts
- basiert das Zuordnen zumindest teilweise auf der empfangenen Laufwegindikation und/oder dem Laufweg einerseits und zumindest einem Referenzlaufweg für zumindest eine Radposition andererseits.

Eine weitere Möglichkeit, eine Zuordnung zwischen einer Radposition und einer Reifendrucksensoranordnung vorzunehmen, bedient sich eines Referenzlaufwegs. Ein Referenzlaufweg repräsentiert hierbei beispielsweise einen erwarteten Laufweg für eine gegebene Radposition. Einem Referenzlaufweg ist damit eine Radposition zugeordnet. Der Referenzlaufweg ist beispielsweise empirisch bestimmt, beispielsweise basierend auf einer Vermessung eines bestimmten Fahrzeugs und/oder Fahrzeugmodells. Auch kann der Referenzlaufweg beispielsweise modellbasiert, beispielsweise basierend auf einer Simulation des zurückgelegten Laufwegs eines Rads an verschiedenen Radpositionen, beispielsweise für verschiedene Kurvenradien, Reifenarten, Untergründe, und/oder Geschwindigkeiten (z.B. Drehgeschwindigkeiten und/oder Fahrzeuggeschwindigkeiten) bestimmt werden.

Beispielsweise kann ein abgeleiteter und/oder bestimmter Laufweg für eine gegebene Reifendrucksensoranordnung mit zumindest einem oder mehreren Referenzlaufwegen verglichen werden. Der zu dem abgeleiteten und/oder bestimmten Laufweg ähnlichste Referenzlaufweg kann ausgewählt werden und die ihm zugeordnete Radposition kann der Reifendrucksensoranordnung zugeordnet werden. Alternativ oder zusätzlich kann eine vordefinierte minimale Ähnlichkeit vorausgesetzt werden, ab der eine Zuordnung vorgenommen wird.

Ein Vergleich zwischen einem Laufweg und einem Referenzlaufweg kann beispielsweise mittels einer (z.B. absoluten und/oder relativen) Differenz bestimmt werden.

Der Laufweg kann insbesondere unter Berücksichtigung und/oder zumindest teilweise basierend auf einer Zeitspanne, über die der Laufweg zurückgelegt wurde, mit einem Referenzlaufweg verglichen werden. Beispielsweise kann der Referenzlaufweg für eine vordefinierte Referenzzeitspanne definiert sein und/oder relativ zu einer Referenzzeitspanne. Der Laufweg kann beispielsweise auf die Referenzzeitspanne skaliert werden, insbesondere linear.

Gemäß einem Ausführungsbeispiel des dritten Aspekts umfasst das Verfahren ferner
- Empfangen eines weiteren Kommunikationssignals, umfassend eine weitere Reifendruckindikation eines weiteren Reifens eines weiteren Rads und eine weitere Laufwegindikation des weiteren Rads von einer weiteren Reifendrucksensoranordnung, und
- wobei das Zuordnen ferner auf der weiteren Laufwegindikation basiert.

Es wurde erkannt, dass Räder an unterschiedlichen Radpositionen unterschiedliche Laufwege zurücklegen. Es kann daher vorteilhaft sein, die von verschiedenen Reifendrucksensoranordnungen zurückgelegten Laufwege untereinander zu vergleichen.

Das Zuordnen kann vorliegend auf einem Vergleich zwischen der Laufwegindikation und der weiteren Laufwegindikation basieren.

Beispielsweise können zumindest zwei Laufwege, welche von zwei verschiedenen Laufwegindikationen zweier verschiedener Kommunikationssignale von zwei verschiedenen Reifendrucksensoranordnungen repräsentiert werden, miteinander verglichen werden. Beispielsweise kann bei diesem Vergleich eine jeweilige Zeitspanne berücksichtigt werden, über die die Laufwege zurückgelegt wurden. Beispielsweise können die beiden Laufwege auf eine gleiche, gemeinsame Zeitspanne skaliert werden, insbesondere linear.

Beispielsweise kann basierend auf einer vordefinierten Relation zwischen den Laufwegen verschiedener Radpositionen eine Zuordnung zwischen einer Reifendrucksensoranordnung und einer Radposition vorgenommen werden. Beispielsweise kann die vordefinierte Relation abhängig von einer Kurvenrichtung und/oder von einer Fahrzeugseite der Radpositionen sein. Eine Relation kann insbesondere ein Größenverhältnis sein, beispielsweise kann die Relation beschreiben, dass Räder in einer vorderen, mittleren oder hinteren Radposition einen weiteren Laufweg zurücklegen als Räder in einer anderen der Radpositionen, beispielsweise für eine Links- und/oder Rechtskurve, beispielsweise für eine Fahrzeugseite (z.B. rechts oder links in Fahrtrichtung).

Beispielsweise kann ein Zuordnen alternativ oder zusätzlich ein Sortieren von Reifendrucksensoranordnungen, basierend auf der von ihnen übermittelten Laufwegindikation, umfassen. Beispielsweise können die übermittelten Laufwegindikationen der Reifendrucksensoranordnungen dem Wert nach aufsteigend mit einem von dem Rad an dem sie angeordnet sind zurückgelegten Laufweg sortiert werden. Beispielsweise können Reifendrucksensoranordnungen pro Fahrzeugseite sortiert werden und so in manchen Fällen bereits die Reihenfolge der zugehörigen Radpositionen ermittelt werden.

Beispielsweise kann der Laufweg an einer Radposition und/oder Unterschiede zwischen Laufwegen unterschiedlicher Radpositionen, insbesondere während ein und derselben Kurvenfahrt, abhängig von einem Drehpunkt des Fahrzeugs sein. Ein Drehpunkt kann beispielsweise abhängig von permanenten Eigenschaften des Fahrzeugs sein (beispielsweise Fahrzeuggeometrie, -gewicht). Auch kann der Drehpunkt abhängig sein von einer Beladung, einem Reifendruck, einer Neigung des Fahrzeugs und/oder einer Stellung sogenannter Liftachsen, welche vom Boden angehoben und/oder zum Boden hin abgesenkt werden können. Insbesondere kann die Verteilung des Gewichts des Fahrzeugs und/oder seiner Ladung auf die Räder variieren, z.B. eher vorne/ hinten/rechts/links liegen.

Gemäß einem Ausführungsbeispiel des dritten Aspekts
- umfasst das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation.

Das in Hinblick auf den ersten und zweiten Aspekt Offenbarte gilt gleichermaßen für den dritten Aspekt.

Gemäß einem Ausführungsbeispiel des dritten Aspekts umfasst das Verfahren ferner
- Erfassen zumindest einer Fahrzeugbeschleunigung.

Die Fahrzeugbeschleunigung gibt insbesondere eine Beschleunigung des (z.B. gesamten) Fahrzeugs an. Die Fahrzeugbeschleunigung ist insbesondere zu unterscheiden von der zumindest einen Beschleunigung des Rads, welche von der Reifendrucksensoranordnung erfasst wird.

Die Fahrzeugbeschleunigung kann in zumindest einer oder mehreren Erfassungsachsen erfasst werden. Die Fahrzeugbeschleunigung kann insbesondere eine Querbeschleunigung umfassen, welche im Wesentlichen entlang einer Erfassungsachse erfasst wird, welche parallel zu zumindest einer Rotationsachse zumindest eines Rads ausgerichtet ist. Auch kann die Fahrzeugbeschleunigung eine Beschleunigung entlang einer Längsachse des Fahrzeugs, beispielsweise im Wesentlichen senkrecht zu einer Rotationsachse und im Wesentlichen parallel zur Fahrbahn, umfassen. Hierdurch kann beispielsweise eine Beschleunigung und/oder Bremsung des Fahrzeugs in Fahrtrichtung detektiert werden.

Die Fahrzeugbeschleunigung kann beispielsweise als eine Vergleichsgröße für die Zuordnung zwischen Reifendrucksensoranordnungen und Radpositionen genutzt werden. Basierend auf der Fahrzeugbeschleunigung (insbesondere einer Querbeschleunigung) kann eine Kurvenfahrt detektiert werden. Auch kann basierend auf der Fahrzeugbeschleunigung ein Trigger-Signal ausgesendet werden, beispielsweise an zumindest eine oder mehrere Reifendrucksensoranordnungen. Beispielsweise kann das Trigger-Signal ausgesendet werden, wenn die Fahrzeugbeschleunigung (beispielsweise Querbeschleunigung) einen vordefinierten Fahrzeugbeschleunigungsschwellwert überschreitet. Das Trigger-Signal kann insbesondere dazu eingerichtet ist, die Reifendrucksensoranordnungen dazu zu veranlassen, eine Messung zu beginnen, beispielsweise einen Laufweg und/oder eine Laufwegindikation zu erfassen.

Gemäß einem Ausführungsbeispiel des dritten Aspekts umfasst das Verfahren ferner
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

Ähnlich zur Laufwegindikation kann die jeweilige Indikation (Kurvenrichtungsindikation, Drehgeschwindigkeitsindikation, und/oder Drehrichtungsindikation) allein genügen um die Information (Kurvenrichtung, Drehgeschwindigkeit, und/oder Drehrichtung) abzuleiten. Es können auch weitere Informationen wie beispielsweise eine Tabelle, zu der die Indikation einen Index umfasst, oder weitere Schritte wie z.B. die Auswertung einer von der jeweiligen Indikation umfassten Beschleunigung genutzt werden.

Gemäß einem Ausführungsbeispiel des dritten Aspekts
- basiert das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung.

Das Zuordnen kann beispielsweise basierend auf der Kurvenrichtungsindikation und/oder der Kurvenrichtung einen Referenzlaufweg auswählen, eine Relation zwischen Laufwegen an verschiedenen Radpositionen auswählen und/oder die Zuordnung auf vordefinierte Radpositionen einschränken.

Das Zuordnen kann basierend auf der Drehgeschwindigkeitsindikation und/oder Drehgeschwindigkeit auf Drehgeschwindigkeiten unterhalb eines vordefinierten Drehgeschwindigkeitsschwellwerts beschränkt sein. Der Drehgeschwindigkeitsschwellwert kann beispielsweise den in Hinblick auf den ersten Aspekt offenbarten unteren und/oder oberen Drehgeschwindigkeitsschwellwerten entsprechen.

Das Zuordnen kann, beispielsweise basierend auf der Drehrichtungsindikation, eine jeweilige Reifendrucksensoranordnung (z.B. zunächst, in einem ersten Schritt) einer Fahrzeugseite (z.B. links oder rechts in Fahrtrichtung) zuordnen.

Das Zuordnen kann, beispielsweise basierend auf der Zeitindikation, vor dem Zuordnen eine Skalierung des Laufwegs vornehmen, um diesen mit anderen Laufwegen und/oder einem Referenzlaufweg zu vergleichen. Beispielsweise kann hierfür eine Zeitindikation für den Laufweg herangezogen werden und eine andere Zeitindikation für einen anderen Laufweg (z.B. wobei die Zeitindikationen jeweils dem Laufweg zugeordnet sind), mit dem der Laufweg verglichen werden soll. Beispielsweise kann der Quotient aus der anderen Zeitindikation für den anderen Laufweg und der Zeitindikation für den Laufweg genutzt werden, um den Laufweg zu skalieren und/oder die jeweilige Zeitindikation zur Skalierung des jeweiligen Laufwegs herangezogen werden.

Das Zuordnen kann beispielsweise basierend auf der Fahrzeugbeschleunigung vorgenommen werden. Beispielsweise kann die Fahrzeugbeschleunigung herangezogen werden, um eine Kurvenfahrt zu detektieren. Laufwege, die während der Kurvenfahrt als Laufwegindikationen in den Kommunikationssignalen empfangen werden, können verglichen werden.

Gemäß einem Ausführungsbeispiel des dritten Aspekts
- basiert der Referenzlaufweg auf einem weiteren Kommunikationssignal, wobei das weitere Kommunikationssignal von einer weiteren Reifendrucksensoranordnung stammt, und/oder
- ist der Referenzlaufweg für eine Radposition vordefiniert und/oder
- ist der Referenzlaufweg für eine Radposition empirisch bestimmt, insbesondere zumindest teilweise basierend auf der zumindest einen erfassten Beschleunigung und/oder auf einem Drehwinkelmesser, und/oder
- ist der Referenzlaufweg modellbasiert bestimmt, insbesondere basierend auf einer Simulation.

Der Referenzlaufweg kann beispielsweise auf einem weiteren Kommunikationssignal basieren. Insbesondere kann ein Laufweg einer anderen Reifendrucksensoranordnung (und/oder des Rads, an welchem die andere Reifendrucksensoranordnung angeordnet ist), welcher von der von der anderen Reifendrucksensoranordnung empfangenen Laufwegindikation repräsentiert wird, entsprechen und/oder auf dieser basieren.

Der Referenzlaufweg kann für eine Radposition vordefiniert sein. Hierdurch kann eine Zuordnung zwischen der Reifendrucksensoranordnung, von der eine Laufwegindikation empfangen wird, und der Radposition, basierend auf dem Laufweg und dem Referenzlaufweg, vorgenommen werden.

Der Referenzlaufweg kann abhängig von einem Drehpunkt des Fahrzeugs sein. Für den Drehpunkt gilt die Offenbarung hinsichtlich des ersten Aspekts.

Der Referenzlaufweg kann empirisch bestimmt sein, beispielsweise, indem Laufwege von Rädern an Radpositionen vermessen werden. Hierfür kann sowohl der Beschleunigungssensor der Reifendrucksensoranordnung als auch ein Drehwinkelmesser verwendet werden. Der Drehwinkelmesser kann beispielsweise im Rahmen einer Vermessung am Rad und/oder Reifen angebracht werden (beispielsweise an einem Prüfstand) und/oder auf einem ABS-Sensor basieren.

Der Referenzlaufweg kann modellbasiert bestimmt sein, beispielsweise basierend auf einer geometrischen, physikalischen und/oder numerischen Simulation.

Gemäß einem vierten Aspekt der Erfindung wird eine Vorrichtung vorgeschlagen, umfassend Mittel, die dazu eingerichtet sind, das Verfahren nach dem dritten Aspekt auszuführen und/oder zu steuern.

Die Vorrichtung kann beispielsweise (z.B. fest) im Fahrzeug verbaut sein. Beispielsweise umfasst die Vorrichtung ein Gehäuse, welches übrige Komponenten der Vorrichtung einhaust, insbesondere fluiddicht. Beispielsweise kann die Vorrichtung eine Telematikeinheit des Fahrzeugs oder eine Steuerungseinheit einer Transportkältemaschine sein. Die Vorrichtung kann an einer (z.B. einzigen) Stelle im Fahrzeug lokalisiert sein. Auch kann die Vorrichtung sich auf zumindest 2 oder mehr Positionen im Fahrzeug verteilen.

Beispielsweise kann die Vorrichtung dazu eingerichtet sein, an zwei voneinander beabstandeten Positionen im Fahrzeug das Kommunikationssignal zu empfangen.

Gemäß einem Ausführungsbeispiel des vierten Aspekts, umfasst die Vorrichtung
- zumindest einen Beschleunigungssensor, wobei der Beschleunigungssensor dazu eingerichtet ist, die zumindest eine Fahrzeugbeschleunigung, umfassend eine Querbeschleunigung, zu erfassen.

Der Beschleunigungssensor kann beispielsweise mit der Vorrichtung integriert sein. Der Beschleunigungssensor kann beispielsweise eine Beschleunigung in einer oder zwei (oder drei) Erfassungsachsen erfassen. Eine der zumindest einen Fahrzeugbeschleunigungen kann im Wesentlichen parallel zu zumindest einer Rotationsachse eines Rades des Fahrzeugs (und/oder einer Radachse des Fahrzeuges, an der Räder des Fahrzeugs gelagert sind) ausgerichtet sein. Hierdurch kann beispielsweise eine Querbeschleunigung erfasst werden. Auch kann zumindest eine Beschleunigung in einer weiteren Erfassungsachse erfasst werden. Beispielsweise in einer Erfassungsachse welche im Wesentlichen senkrecht zur Erfassungsachse ist, in der die Querbeschleunigung erfasst wird. Beispielsweise kann die Erfassungsachse im Wesentlichen in Längsrichtung und/oder Fahrrichtung des Fahrzeugs ausgerichtet sein.

Gemäß einem Ausführungsbeispiel des vierten Aspekts, umfasst die Vorrichtung
- ein Kommunikationsmittel, wobei das Kommunikationsmittel für das Empfangen des Kommunikationssignals eingerichtet ist, und/oder
- ein Zuordnungsmittel, wobei das Zuordnungsmittel für das Zuordnen eingerichtet ist.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen empfangen kann. Das Kommunikationsmittel kann beispielsweise dazu eingerichtet sein, ein Signal (beispielsweise das Kommunikationssignal) zu empfangen. Hierfür kann das Kommunikationsmittel beispielsweise dauerhaft empfangsbereit sein, beispielsweise, solange die Vorrichtung mit Energie versorgt wird. Das Kommunikationsmittel kann beispielsweise auf einer Trägerfrequenz Signale empfangen. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten zu empfangen. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, ein paketbasiertes Empfangen von Daten zu ermöglichen.

Das Kommunikationsmittel kann gemäß einem Ausführungsbeispiel eine isotrope Richtcharakteristik aufweisen und im Wesentlichen aus allen Empfangsrichtungen Signale in gleich guter Stärke und Qualität empfangen. Auch eine anisotrope Richtcharakteristik ist möglich. Alternativ oder zusätzlich kann das Kommunikationsmittel mehrere Antennen umfassen, wobei die Antennen beispielsweise voneinander verschiedene rezeptive Felder (beispielsweise Raumwinkel, in welchen Signal oberhalb einer vordefinierten Empfindlichkeit empfangen werden können) aufweisen.

Gemäß einem Ausführungsbeispiel des vierten Aspekts umfasst die Vorrichtung
- ein Vergleichsmittel, wobei das Vergleichsmittel für den Vergleich der empfangenen Laufwegindikation und/oder dem Laufweg mit zumindest einem Referenzlaufweg eingerichtet ist.

Gemäß einem Ausführungsbeispiel des vierten Aspekts umfasst die Vorrichtung
- ein Ableit- und/oder Bestimmungsmittel, wobei das ein Ableit- und/oder Bestimmungsmittel zum Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation eingerichtet ist.

Das Vergleichsmittel und/oder das Ableit- und/oder Bestimmungsmittel können beispielsweise (funktionale Einheiten in einem jeweiligen oder gemeinsamen) Rechenmittel sein. Rechenmittel können beispielsweise zumindest einen Prozessor, einen Speicher, einen Microcontroller, ein FPGA, einen ASIC und/oder Kombinationen hieraus umfassen. Beispielsweise kann ein Speicher der Rechenmittel Instruktionen umfassen, welche, wenn sie von den zumindest einen Rechenmittel ausgeführt werden, die Vorrichtung dazu veranlassen, die entsprechenden Schritte des Verfahrens gemäß dem dritten Aspekt auszuführen und/oder zu steuern. Eine funktionale Einheit kann beispielsweise eine Menge von Instruktionen sein, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Die Offenbarung in Hinblick auf den ersten bis dritten Aspekt gilt gleichermaßen für den vierten Aspekt.

Gemäß einem fünften Aspekt der Erfindung wird ein System vorgeschlagen umfassend zumindest eine Reifendrucksensoranordnung nach dem zweiten Aspekt und eine Vorrichtung nach dem vierten Aspekt.

Das System kann insbesondere mehrere Reifendrucksensoranordnungen umfassen.

Die Vorrichtung kann hierbei dazu eingerichtet sein, Kommunikationssignale von der zumindest einen Reifendrucksensoranordnung oder den mehreren Reifendrucksensoranordnungen zu empfangen und zu der jeweiligen Reifendrucksensoranordnung eine Radposition des Fahrzeugs zuzuordnen.

Gemäß einem sechsten Aspekt der Erfindung wird ein Fahrzeug vorgeschlagen, insbesondere ein Nutzfahrzeug, umfassend ein System nach dem fünften Aspekt.

Das Fahrzeug kann insbesondere die Eigenschaften aufweisen, welche in Hinblick auf den ersten Aspekt offenbart sind.

Die Radachsen des Fahrzeugs können zumindest teilweise oder alle starr sein, also lenkunfähig.

Gemäß einem Ausführungsbeispiel des sechsten Aspekts
- ist das Fahrzeug ein Anhänger und/oder
- umfasst das Fahrzeug zumindest sechs Radpositionen.

Das Fahrzeug kann insbesondere ein Anhänger sein, insbesondere für die Verwendung als Nutzfahrzeug, wie in Hinblick auf den ersten Aspekt offenbart.

Beispielsweise kann das Fahrzeug zumindest sechs Radpositionen aufweisen, wobei auf der rechten und der linken Seite des Fahrzeugs jeweils drei Räder in Fahrtrichtung hintereinander angeordnet sind.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln.

Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Rads mit einer Reifendrucksensoranordnung gemäß der Erfindung;
- Fig. 3: eine schematische Darstellung einer beispielhaften Ausführungsform eines Straßennutzfahrzeugs gemäß der Erfindung;
- Fig. 4: eine schematische Darstellung einer beispielhaften Ausführungsform von verschiedenen Radpositionen gemäß der Erfindung;
- Fig. 5: eine schematische Darstellung einer beispielhaften Ausführungsform der Bestimmung und/oder Ableitung eines Laufwegs gemäß der Erfindung;
- Fig. 6: eine schematische Darstellung einer beispielhaften Ausführungsform der Bestimmung und/oder Ableitung eines Laufwegs gemäß der Erfindung;
- Fig. 7: eine schematische Darstellung einer beispielhaften Ausführungsform einer Zuordnung gemäß der Erfindung;
- Fig. 8: eine schematische Darstellung einer beispielhaften Ausführungsform einer Reifendrucksensoranordnung gemäß dem ersten und zweiten Aspekt der Erfindung;
- Fig. 9: eine schematische Darstellung einer beispielhaften Ausführungsform Kurvenfahrt gemäß der Erfindung;
- Fig. 10: ein Fließdiagramm einer beispielhaften Ausführungsform des Verfahrens gemäß dem ersten und zweiten Aspekt der Erfindung;
- Fig. 11: ein Fließdiagramm einer beispielhaften Ausführungsform eines Verfahrens gemäß dem dritten und vierten Aspekt der Erfindung;
- Fig. 12: ein Blockdiagramm einer beispielhaften Ausführungsform gemäß dem ersten und zweiten Aspekt der Erfindung;
- Fig. 13: ein Blockdiagramm einer beispielhaften Ausführungsform gemäß dem dritten und vierten Aspekt der Erfindung;
- Fig. 14: beispielhafte Speichermedien.

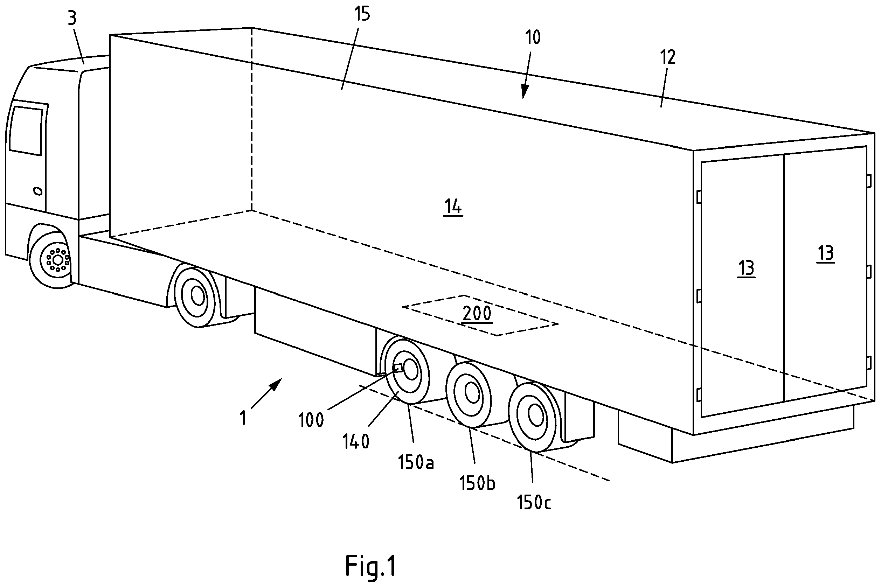

Fig. 1 ist eine schematische Darstellung einer beispielhaften Ausführungsform eines Fahrzeugs 1 gemäß der Erfindung, beispielsweise nach dem sechsen Aspekt der Erfindung.

Das gezeigte Fahrzeug 1 ist ein Nutzfahrzeug 1, genauer ein Anhänger 1, genauer noch ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 gemäß dem dritten Aspekt der Erfindung angeordnet, deren ungefähre Position gestrichelt angedeutet ist. Hierbei kann es sich beispielsweise um eine Telematikeinheit 200 des Anhängers 1 handeln. An zumindest einem der Räder 140 an einer Reifenposition 150a oder auch an Rädern weiterer Radpositionen 150b und 150c des Anhängers 1 ist ein Reifendrucksensor 100, beispielsweise gemäß dem zweiten Aspekt der Erfindung, angeordnet. Dieser sendet Kommunikationssignale, welche von der Vorrichtung 200 empfangen werden.

Der Sattelauflieger 1 wird von einem Zugfahrzeug 3 gezogen.

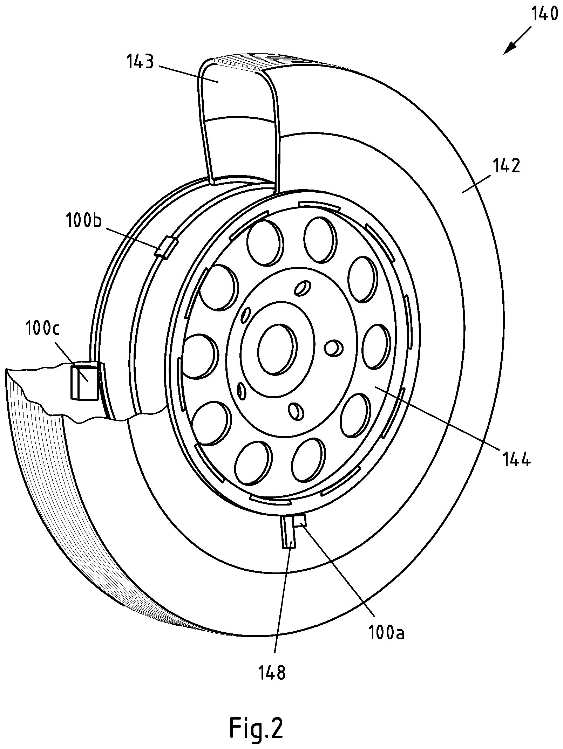

Fig. 2 zeigt ein Rad 140. Dieses umfasst einen Reifen 142. Der Reifen 142 kann beispielsweise Gummi und Metalleinlagen umfassen. Ferner umfasst das Rad 140 eine Felge 144. Die Felge 144 kann beispielsweise aus einem Metallwerkstoff gefertigt sein. Zwischen der Felge 144 und dem Reifen 142 befindet sich ein Innenraum 143 des Reifens 142. Der Innenraum 143 ist mit einem Gas, insbesondere Luft, gefüllt und steht unter Druck. Über ein Ventil 148 kann der Innenraum 143 mit dem Gas befüllt werden.

An dem Rad 140 ist eine Reifendrucksensoranordnung 100a, 100b, 100c angeordnet, beispielsweise nach dem zweiten Aspekt der Erfindung. Zu Illustrationszwecken sind drei solcher Reifendrucksensoranordnungen 100a, 100b, 100c gezeigt. Üblicherweise wird nur eine Reifendrucksensoranordnung 100a, 100b, 100c pro Rad verwendet. Gezeigt sind verschiedene Befestigungsmethoden für die Reifendrucksensoranordnung. So kann die Reifendrucksensoranordnung 100a in einem Bereich am Ventil 148 des Rads 140 angeordnet sein, entweder innerhalb des Innenraums 143 oder außen an der Felge 144. Die Reifendrucksensoranordnung 100b kann auch an der Felge 144 mit einem Spanngurt befestigt sein oder, siehe Reifendrucksensoranordnung 100c, mit dem Reifen verbunden, beispielsweise anvulkanisiert, sein.

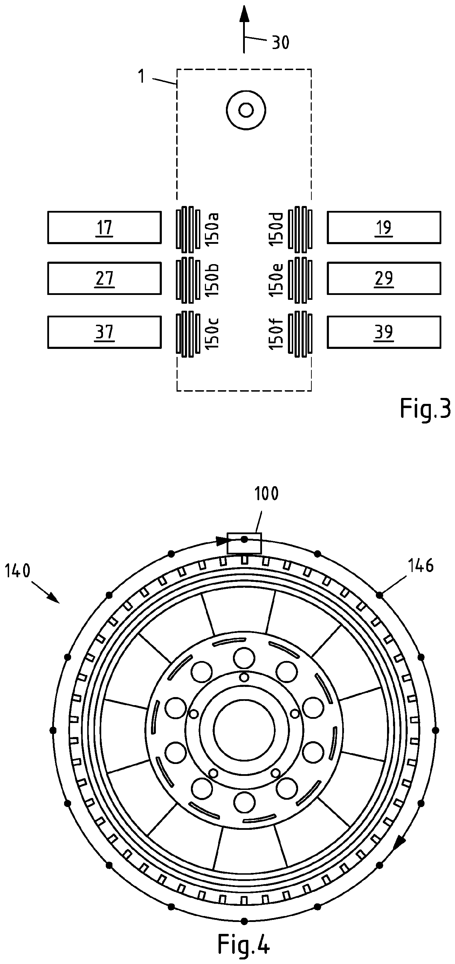

Fig. 3 zeigt eine schematische Ansicht eines Fahrzeugs 1 gemäß einem Ausführungsbeispiel, beispielsweise gemäß dem sechsten Aspekt der Erfindung. Das Fahrzeug 1 ist ein Anhänger 1. Dieser wird von einer nicht dargestellten Zugmaschine in einer Vorwärtsfahrtrichtung 30 gezogen. Zu sehen sind die sechs Radpositionen 150a bis 150f. Den Radpositionen 150a - 150f ist jeweils eine Zahl zugeordnet, wie in Fig. 3 gezeigt.

Fig. 4 zeigt ein Rad 140 mit einer Reifendrucksensoranordnung 100, beispielsweise nach dem zweiten Aspekt der Erfindung. Zu sehen sind ebenfalls mehrere Drehwinkelpositionen 146. Wenn sich das Rad 140 dreht, durchläuft dieses und damit auch die Reifendrucksensoranordnung 100 die gezeigten Drehwinkelpositionen 146. Gezeigt ist eine beschränkte Anzahl von diskreten Drehwinkelpositionen 146.

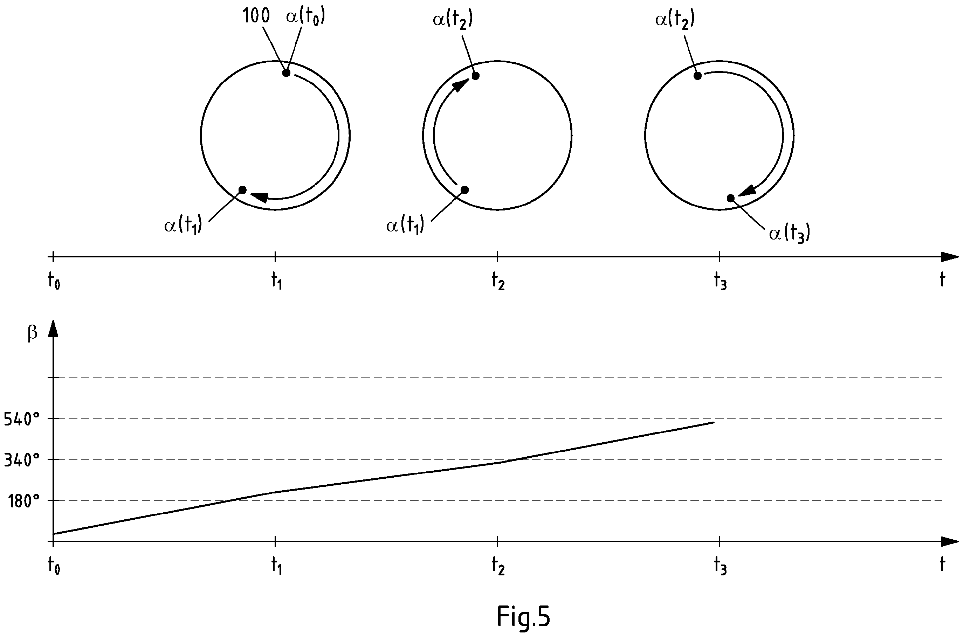

Fig. 5 zeigt ein Rad 140 mit einer Reifendrucksensoranordnung 100 in verschiedenen Drehwinkelpositionen *α*. Es wird illustriert, wie aus mehreren erfassten momentanen Drehwinkelposition *α* ein Laufweg β bestimmt werden kann, welcher mehr als eine Umdrehung des Rades 140 beträgt. Über eine Zeit von t0 über t1 und t2 bis t3 wird ein Laufweg β erfasst, welcher sich aus den Drehwinkelpositionen α(t₁) - α(t₀), α(t₂) - α(t₁) und α(t₃) - α(t₂) zusammensetzt. Durch die Erfassung einzelner Drehwinkelpositionen, welche voneinander um weniger als 360° abweichen kann der Laufweg *β* bestimmt werden.

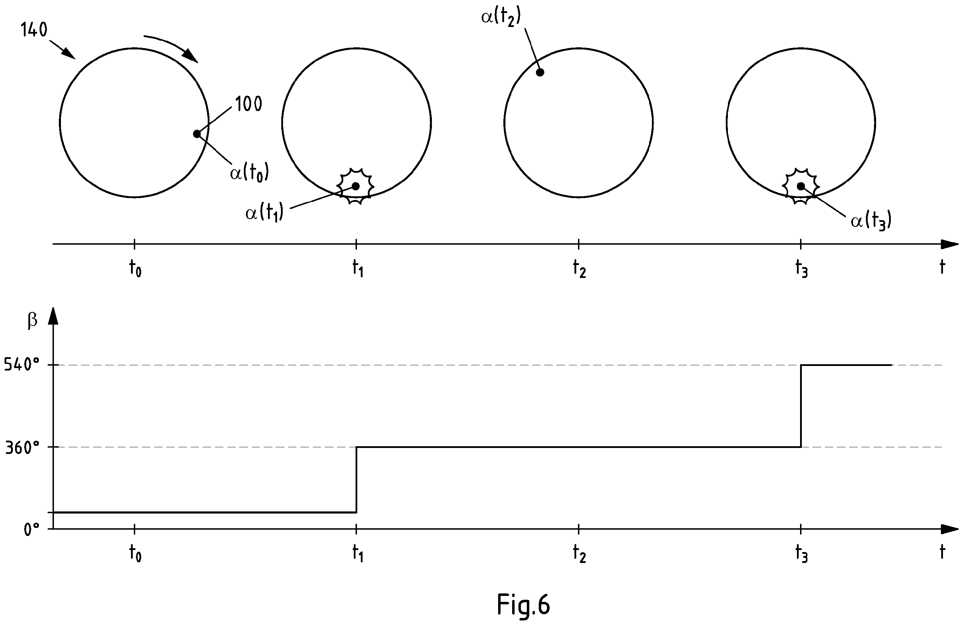

Fig. 6 illustriert eine alternative Art, den Laufweg *β* zu bestimmen. Auch hier ist ein Rad 140 mit einer Reifendrucksensoranordnung 100 dargestellt. Das Rad 140 dreht sich. Mittels eines Beschleunigungssensors in der Reifendrucksensoranordnung 100 kann ein Bodenkontakt zwischen dem Rad 140, insbesondere dessen Reifen, insbesondere in einem Bereich, in dem die Reifendrucksensoranordnung angeordnet ist, detektiert werden. Beispielsweise wird hierbei eine Erschütterung detektiert. Auch kann alternativ oder zusätzlich eine konstruktive Überlagerung zwischen Zentrifugalkraft und Erdbeschleunigung als ein Maximum im zeitlichen Verlauf einer radialen Beschleunigung erkannt werden. In beiden Fällen wird ein Ereignis, welches einmal pro Umdrehung des Rads eintritt, festgestellt, aus dem geschlossen werden kann, dass eine Umdrehung vom Rad 140 vollführt wurde. Der Laufweg *β* kann damit beispielsweise als eine Anzahl von ganzen Umdrehungen festgehalten werden.

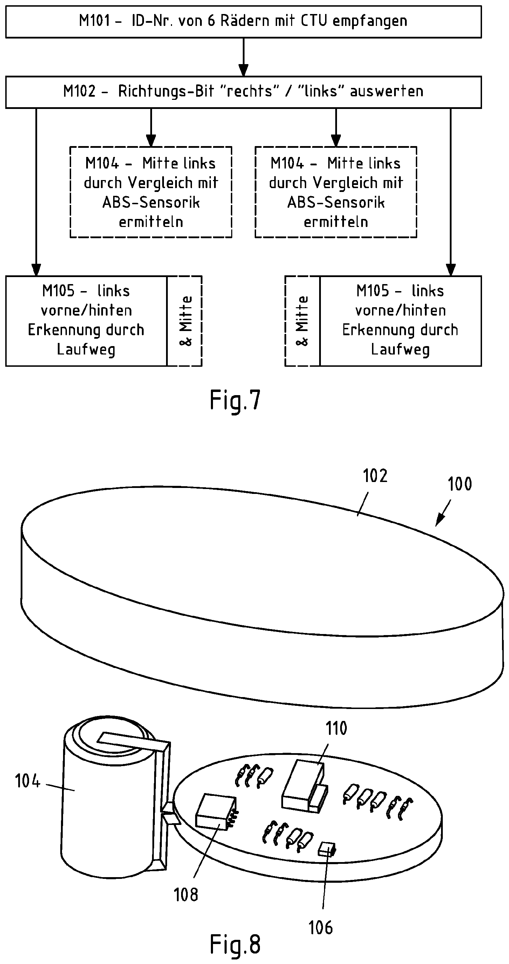

Fig. 7 zeigt eine beispielhafte Vorgehensweise der Zuordnung zwischen einer Reifendrucksensoranordnung 100 und einer jeweiligen Radposition 150. Von beispielhaften 6 Rädern wird mittels einer Telematikeinheit (CTU) ein Kommunikationssignal, umfassend eine Identifikation von der jeweiligen Reifendrucksensoranordnung 100, empfangen (Schritt M101). Vorzugsweise werden mehrere Kommunikationssignale von verschiedenen Reifendrucksensoranordnungen 100, 100' empfangen, sodass die Laufwege verschiedener Räder verglichen werden können. Ein Kommunikationssignal kann weitere Informationen enthalten, insbesondere eine Drehrichtungsindikation (hier "Drehrichtungs-Bit"). Anhand dieses Drehrichtungs-Bits können die Reifendrucksensoranordnungen 100 in rechts und links aufgeteilt werden (M102, M103). Im Beispiel ist die jeweils mittlere Radposition (z.B. einer jeweiligen Fahrzeugseite) mit einer optionalen ABS-Sensorik versehen, anhand derer eine der Reifendrucksensoranordnungen 100 mit dieser mittleren Radposition verknüpft werden kann.

In Schritt M105 werden noch die verbleibenden je zwei Radpositionen 150 der beiden Fahrzeugseiten den jeweiligen Reifendrucksensoranordnungen 100 zugeordnet. Hierbei werden beispielsweise zwei Referenzlaufwege, je einer für die vordere und einer für die hintere Radposition 150, vorgehalten und mit einer empfangenen Laufwegindikation verglichen. Auch können die Laufwege zweier Reifendrucksensoranordnungen 100, 100' verglichen werden, insbesondere, wenn diese derselben Seite des Fahrzeugs zugeordnet wurden.

Fig. 8 zeigt eine Reifendrucksensoranordnung 100 gemäß einem Ausführungsbeispiel. Die Reifendrucksensoranordnung 100 umfasst ein Gehäuse 102, welches die Elektronik einhaust. Als Energiespeicher 104 ist eine Knopfzelle 104 vorgesehen. Auf der Platine sind eine Antenne 110 des Kommunikationsmittels, ein Drucksensor 106 sowie ein Beschleunigungssensor 108 angeordnet.

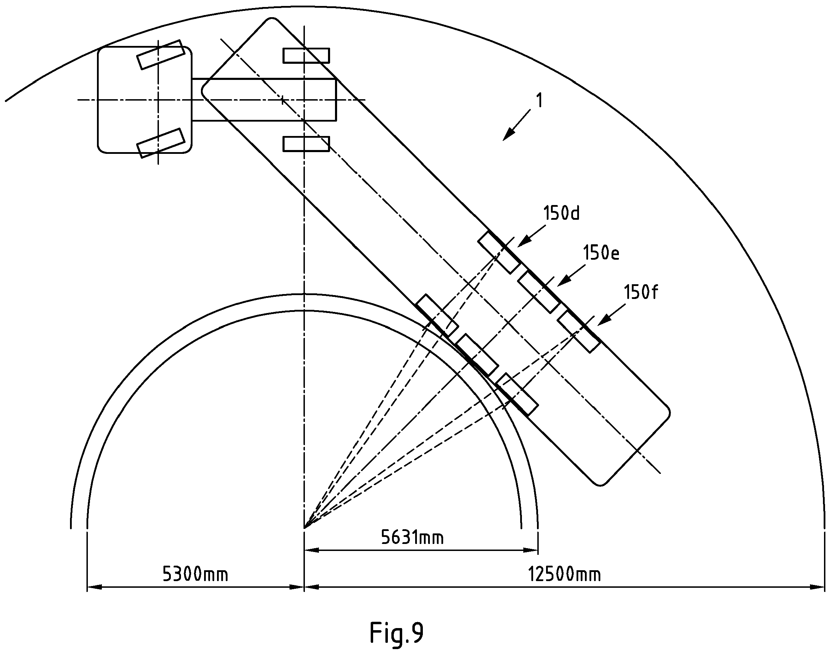

Fig. 9 illustriert eine Kurvenfahrt eines Anhängers 1 mit einer Zugmaschine. Insbesondere an den drei Hinterachsen, an welchen jeweils 2 Räder (eins links, eins rechts) angeordnet sind, ergeben sich bei einer Kurvenfahrt wie dargestellt vorwärts (Richtung Zugmaschine) verschiedene Laufwege für die verschiedenen Radpositionen 150d, 150e, 150f. Beispielsweise kann, bezogen auf eine Seite des Fahrzeugs, das hintere Rad einen längeren Laufweg zurücklegen als das vordere Rad und/oder das mittlere Rad.

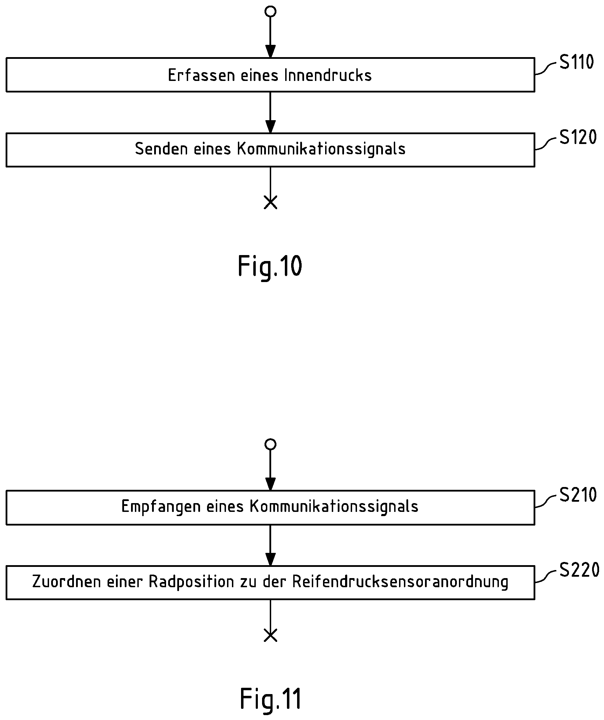

Fig. 10 ist ein Fließdiagram, welches das Verfahren gemäß dem ersten Aspekt illustriert, welches beispielsweise von einer Reifendrucksensoranordnung 100 gemäß dem zweiten Aspekt ausgeführt wird. Zunächst wird in Schritt S110 ein Innendruck des Reifens erfasst, insbesondere mit dem Drucksensor 106 einer Reifendrucksensoranordnung 100, beispielsweise nach dem zweiten Aspekt. Dann wird in Schritt S120 ein Kommunikationssignal gesendet, welches eine Reifendruckindikation und eine Laufwegindikation umfasst.

Fig. 11 zeigt in einem weiteren Fließdiagram, das ein Verfahren gemäß dem dritten Aspekt illustriert, wie es beispielsweise von einer Vorrichtung 200 nach dem vierten Aspekt ausgeführt werden kann. In Schritt S210 wird ein Kommunikationssignal empfangen, wobei das Kommunikationssignal eine Laufwegindikation umfasst. Diese empfangene Laufwegindikation nutzt Schritt S220 dann zum Zuordnen von einer Radposition 150 zu der Reifendrucksensoranordnung 100.

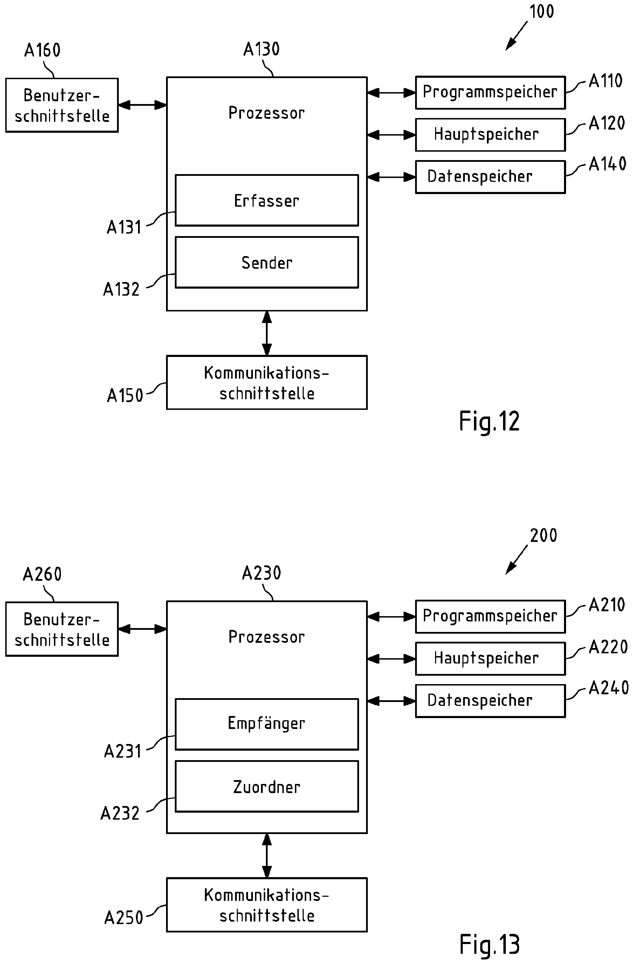

Fig. 12 zeigt ein Ausführungsbeispiel einer Reifendrucksensoranordnung 100 gemäß dem zweiten Aspekt. Die Reifendrucksensoranordnung 100 kann einen Programmspeicher A110, einen Hauptspeicher A120 und einen Datenspeicher A140 umfassen. Die Reifendrucksensoranordnung 100 kann ferner eine Benutzerschnittstelle A160 umfassen, die es beispielsweise einem Benutzer der Vorrichtung ermöglichen kann, mit ihr zu interagieren. Die Vorrichtung kann ferner eine Kommunikationsschnittstelle A150 umfassen, die beispielsweise so konfiguriert sein kann, dass sie mit mindestens einer anderen Vorrichtung, beispielsweise einer Vorrichtung gemäß dem vierten Aspekt, kommuniziert. Insbesondere kann die Kommunikationsschnittstelle A150 dazu eingerichtet sein, das Kommunikationssignal zu senden.

Die Reifendrucksensoranordnung 100 kann mindestens die Funktionseinheiten A131 und A132 umfassen. Die Funktionseinheiten A131 und A132 können hier und im Folgenden beispielsweise Softwaremodulen, Teilen eines Computerprogramms, Computerbefehlen, funktionalen elektronischen Schaltungen, mit der Reifendrucksensoranordnung 100 verbundenen funktionalen Komponenten und/oder Kombinationen hieraus entsprechen. Die Funktionseinheiten korrespondieren mit den jeweiligen Funktionen, wie sie im Flussdiagramm in Fig. 10 dargestellt sind. Der Sender A132 kann beispielweise mit der Kommunikationsschnittstelle A150 gemeinsam das Senden des Kommunikationssignals bewirken.

Fig. 13 zeigt eine Vorrichtung 200, insbesondere gemäß dem vierten Aspekt. Die Vorrichtung 200 kann Speicherkomponenten A210, A220, A240, eine Benutzerschnittstelle A260 und eine Kommunikationsschnittstelle A250 umfassen, wiederum ähnlich wie die für den zweiten beispielhaften Aspekt in Fig. 12 zur Reifendrucksensoranordnung 100. Die Vorrichtung 200 kann ferner die Funktionseinheiten A231 und A232 umfassen, die jeweils mit den im Flussdiagramm in Fig. 10 dargestellten Schritten korrespondieren.

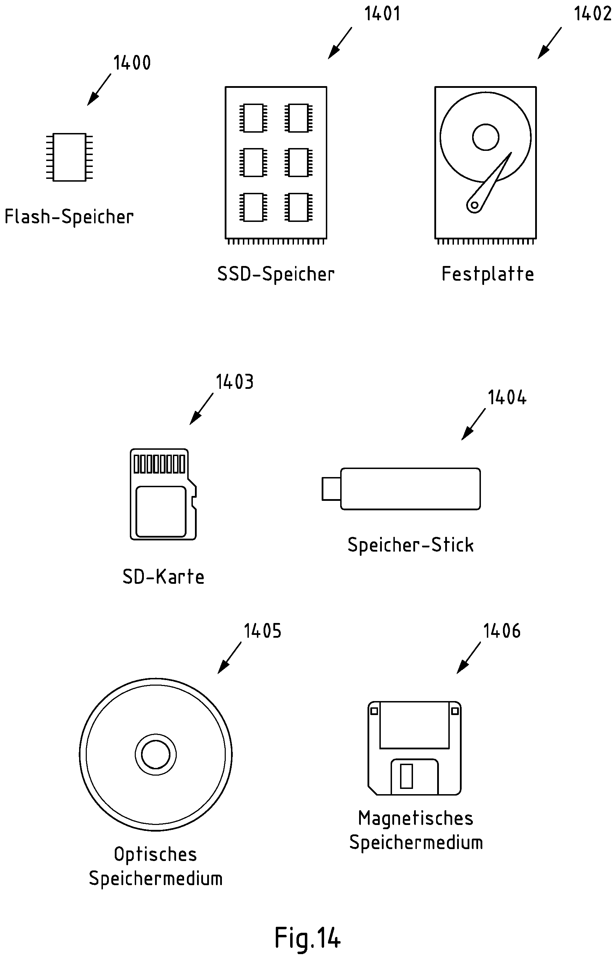

Fig. 14 ist eine schematische Darstellung von Beispielen von materiellen und nichtvergänglichen computerlesbaren Speichermedien gemäß der vorliegenden Erfindung, die beispielsweise zur Implementierung von Programm- und/oder Hauptspeicher A110, A120, A140, A210, A220, A240 der Reifendrucksensoranordnung 100 und/oder der Vorrichtung 200 der Fig. 10 und 12 verwendet werden können. Fig. 14 zeigt einen Flash-Speicher 1400, der z.B. auf eine Leiterplatte gelötet oder gebondet sein kann, ein Solid-State-Laufwerk 1401 mit einer Vielzahl von Speicherchips (z.B. Flash-Speicherchips), eine magnetische Festplatte 1402, eine Secure Digital (SD)-Karte 1403, einen Universal Serial Bus (USB)-Speicherstick 1404, ein optisches Speichermedium 1405 (wie z.B. eine CD-ROM oder DVD) und ein magnetisches Speichermedium 1406.

Ferner sollen die folgenden Ausführungsbeispiele als explizit offenbart gelten.

Ausführungsbeispiel 1:
Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Senden eines Kommunikationssignals, umfassend eine Reifendruckindikation und eine Laufwegindikation, wobei die Reifendruckindikation zumindest den erfassten Innendruck des Reifens repräsentiert, und wobei die Laufwegindikation zumindest einen von dem Rad zurückgelegten Laufweg repräsentiert.

Ausführungsbeispiel 2:
Verfahren nach Ausführungsbeispiel 1, ferner umfassend
- Erfassen zumindest einer Beschleunigung.

Ausführungsbeispiel 3:
Verfahren nach Ausführungsbeispiel 2,
- wobei mehrere Beschleunigungen in zumindest zwei oder drei verschiedenen Erfassungsachsen erfasst werden.

Ausführungsbeispiel 4:
Verfahren nach Ausführungsbeispiel 2 oder 3,
- wobei die Laufwegindikation auf der zumindest einen erfassten Beschleunigung basiert.

Ausführungsbeispiel 5:
Verfahren nach einem der Ausführungsbeispiele 1 bis 4, ferner umfassend
- Detektieren einer Kurvenfahrt des Fahrzeugs, insbesondere eines Beginns einer Kurvenfahrt und/oder eines Endes einer Kurvenfahrt und/oder einer Richtung der Kurvenfahrt.

Ausführungsbeispiel 6:
Verfahren nach Ausführungsbeispiel 5,
- wobei das Detektieren auf zumindest einer der zumindest einen erfassten Beschleunigung basiert.

Ausführungsbeispiel 7:
Verfahren nach einem der Ausführungsbeispiele 1 bis 6,
- wobei die Laufwegindikation einen von dem Rad zurückgelegten Laufweg während zumindest einer Kurvenfahrt repräsentiert.

Ausführungsbeispiel 8:
Verfahren nach Ausführungsbeispiel 7,
- wobei der Laufweg einer Differenz zwischen einer Anfangsdrehwinkelposition des Rads und einer Enddrehwinkelposition des Rads entspricht,
   - wobei die Anfangsdrehwinkelposition einer Drehwinkelposition des Rads zu Beginn einer Kurvenfahrt entspricht und/oder
   - wobei die Enddrehwinkelposition einer Drehwinkelposition des Rads am Ende einer Kurvenfahrt entspricht.

Ausführungsbeispiel 9:
Verfahren nach einem der Ausführungsbeispiele 5 bis 8,
- wobei der Laufweg über zumindest zwei oder mehr Kurvenfahrten summiert ist, und/oder
- wobei der Laufweg über zumindest zwei oder mehr Kurvenfahrten summiert ist, wobei die Kurvenfahrten jeweils die gleiche Richtung aufweisen.

Ausführungsbeispiel 10:
Verfahren nach einem der Ausführungsbeispiele 1 bis 9,
- wobei das Kommunikationssignal ferner eine Kurvenrichtungsindikation umfasst, wobei die Kurvenrichtungsindikation eine Richtung einer Kurvenfahrt repräsentiert, und/oder
- wobei das Kommunikationssignal ferner eine Kurvenanzahlindikation umfasst, wobei die Kurvenanzahlindikation eine Anzahl von durchfahrenen Kurvenfahrten repräsentiert, und/oder
- wobei das Kommunikationssignal ferner eine Drehgeschwindigkeitsindikation umfasst, wobei die Drehgeschwindigkeitsindikation eine Drehgeschwindigkeit des Rads repräsentiert, und/oder
- wobei das Kommunikationssignal ferner eine Drehgeschwindigkeitsindikation umfasst, wobei die Drehgeschwindigkeitsindikation eine Drehgeschwindigkeit des Rads während einer Kurvenfahrt repräsentiert, und/oder
- wobei das Kommunikationssignal ferner eine Drehrichtungsindikation umfasst, wobei die Drehrichtungsindikation eine Drehrichtung des Rads repräsentiert, und/oder
- wobei das Kommunikationssignal ferner eine Identifikation der Reifendrucksensoranordnung umfasst und/oder
- wobei das Kommunikationssignal ferner eine Zeitindikation umfasst, wobei die Zeitindikation der Laufwegindikation zugeordnet ist und/oder wobei die Zeitindikation eine Zeitdauer oder einen Zeitpunkt repräsentiert.

Ausführungsbeispiel 11:
Verfahren nach einem der Ausführungsbeispiele 2 bis 10, ferner umfassend
- Bestimmen und/oder Ableiten der Laufwegindikation basierend auf der zumindest einen erfassten Beschleunigung, und/oder
- Bestimmen und/oder Ableiten der Laufwegindikation basierend auf der zumindest einen erfassten Beschleunigung
   - wobei das Bestimmen und/oder Ableiten der Laufwegindikation abhängig ist von einer Drehgeschwindigkeitsindikation des Rads und/oder
   - wobei das Bestimmen und/oder Ableiten der Laufwegindikation abhängig ist von einer Drehrichtungsindikation des Rads und/oder
   - wobei das Bestimmen und/oder Ableiten der Laufwegindikation abhängig ist von einer Kurvenfahrt, insbesondere von dem Detektieren eines Beginns der Kurvenfahrt und/oder eines Endes der Kurvenfahrt und/oder einer Richtung der Kurvenfahrt, und/oder
- Bestimmen und/oder Ableiten, aus der zumindest einen erfassten Beschleunigung, einer Drehwinkelindikation, einer Drehrichtungsindikation und/oder einer Drehgeschwindigkeitsindikation.

Ausführungsbeispiel 12:
Verfahren nach einem der Ausführungsbeispiele 1 bis 11,
- wobei das Senden abhängig ist von einer Kurvenfahrt, insbesondere von dem Detektieren eines Beginns der Kurvenfahrt und/oder eines Endes der Kurvenfahrt und/oder einer Richtung der Kurvenfahrt.

Ausführungsbeispiel 13:
Reifendrucksensoranordnung für Fahrzeuge, insbesondere Nutzfahrzeuge, umfassend einen Drucksensor und Mittel, die dazu eingerichtet sind, das Verfahren nach einem der Ausführungsbeispiele 1 bis 12 auszuführen und/oder zu steuern.

Ausführungsbeispiel 14:
Reifendrucksensoranordnung nach Ausführungsbeispiel 13,
- wobei der Drucksensor für das Erfassen des Innendrucks des Reifens eingerichtet ist, und/oder
- umfassend ein Kommunikationsmittel, wobei das Kommunikationsmittel für das Senden des Kommunikationssignals eingerichtet ist.

Ausführungsbeispiel 15:
Reifendrucksensoranordnung nach Ausführungsbeispiel 13 oder 14, ferner umfassend
- einen Beschleunigungssensor, wobei der Beschleunigungssensor dazu eingerichtet ist, die zumindest eine Beschleunigung zu erfassen.

Ausführungsbeispiel 16:
Reifendrucksensoranordnung nach einem der Ausführungsbeispiele 13 bis 15, ferner umfassend
- ein Ableitungs- und/oder Bestimmungsmittel, wobei das Ableitungs- und/oder Bestimmungsmittel für die Ableitung des Laufwegs, einer Kurvenfahrt, insbesondere eines Beginns einer Kurvenfahrt und/oder eines Endes einer Kurvenfahrt und/oder einer Richtung einer Kurvenfahrt, einer Anzahl von Kurvenfahrten, einer Drehwinkelposition, insbesondere einer Enddrehwinkelposition und/oder einer Anfangsdrehwinkelposition, einer Drehrichtung und/oder einer Drehgeschwindigkeit eingerichtet ist.

Ausführungsbeispiel 17:
Verfahren zur Reifendrucküberwachung eines Fahrzeugs, insbesondere Nutzfahrzeugs, ausgeführt durch eine Vorrichtung, umfassend
- Empfangen eines Kommunikationssignals, umfassend eine Reifendruckindikation eines Reifens eines Rads und eine Laufwegindikation des Rads von einer Reifendrucksensoranordnung, und
- Zuordnen einer Radposition zu der Reifendrucksensoranordnung zumindest basierend auf der Laufwegindikation.

Ausführungsbeispiel 18:
Verfahren nach Ausführungsbeispiel 17, ferner umfassend
- Bestimmen und/oder Ableiten eines Laufwegs des Rads aus der Laufwegindikation.

Ausführungsbeispiel 19:
Verfahren nach Ausführungsbeispiel 17 oder 18,
- wobei das Zuordnen zumindest teilweise auf der empfangenen Laufwegindikation und/oder dem Laufweg einerseits und zumindest einem Referenzlaufweg für zumindest eine Radposition andererseits basiert.

Ausführungsbeispiel 20:
Verfahren nach einem der Ausführungsbeispiele 17 bis 19,
- ferner umfassend Empfangen eines weiteren Kommunikationssignals, umfassend eine weitere Reifendruckindikation eines weiteren Reifens eines weiteren Rads und eine weitere Laufwegindikation des weiteren Rads, von einer weiteren Reifendrucksensoranordnung, und
- wobei das Zuordnen ferner auf der weiteren Laufwegindikation basiert.

Ausführungsbeispiel 21:
Verfahren nach einem der Ausführungsbeispiele 17 bis 20,
- wobei das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation umfasst.

Ausführungsbeispiel 22:
Verfahren nach einem der Ausführungsbeispiele 17 bis 21, ferner umfassend
- Erfassen zumindest einer Fahrzeugbeschleunigung.

Ausführungsbeispiel 23:
Verfahren nach einem der Ausführungsbeispiele 17 bis 22, ferner umfassend
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

Ausführungsbeispiel 24:
Verfahren nach einem der Ausführungsbeispiele 17 bis 23,
- wobei das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung basiert.

Ausführungsbeispiel 25:
Verfahren nach einem der Ausführungsbeispiele 17 bis 24, wobei der Referenzlaufweg
- auf einem weiteren Kommunikationssignal basiert, wobei das weitere Kommunikationssignal von einer weiteren Reifendrucksensoranordnung stammt, und/oder
- für eine Radposition vordefiniert ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist.

Ausführungsbeispiel 26:
Vorrichtung, umfassend Mittel, die dazu eingerichtet sind, das Verfahren nach einem der Ausführungsbeispiele 17 bis 25 auszuführen und/oder zu steuern.

Ausführungsbeispiel 27:
Vorrichtung nach Ausführungsbeispiel 26, ferner umfassend
- zumindest einen Beschleunigungssensor, wobei der Beschleunigungssensor dazu eingerichtet ist, die zumindest eine Fahrzeugbeschleunigung zu erfassen.

Ausführungsbeispiel 28:
Vorrichtung nach Ausführungsbeispiel 27, umfassend
- ein Kommunikationsmittel, wobei das Kommunikationsmittel für das Empfangen des Kommunikationssignals eingerichtet ist, und/oder
- ein Zuordnungsmittel, wobei das Zuordnungsmittel für das Zuordnen eingerichtet ist.

Ausführungsbeispiel 29:
Vorrichtung nach einem der Ausführungsbeispiele 25 bis 28, ferner umfassend
- ein Vergleichsmittel, wobei das Vergleichsmittel für den Vergleich der empfangenen Laufwegindikation und/oder dem Laufweg mit zumindest einem Referenzlaufweg eingerichtet ist.

Ausführungsbeispiel 30:
Vorrichtung nach einem der Ausführungsbeispiele 25 bis 29, ferner umfassend
- ein Ableit- und/oder Bestimmungsmittel, wobei das ein Ableit- und/oder Bestimmungsmittel zum Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation eingerichtet ist.

Ausführungsbeispiel 31:
System umfassend zumindest eine Reifendrucksensoranordnung nach einem der Ausführungsbeispiele 13 bis 16 und eine Vorrichtung nach einem der Ausführungsbeispiele 25 bis 30.

Ausführungsbeispiel 32:
Fahrzeug, insbesondere Nutzfahrzeug, umfassend ein System gemäß Ausführungsbeispiel 31.

Ausführungsbeispiel 33:
Fahrzeug nach Ausführungsbeispiel 32,
- wobei das Fahrzeug ein Anhänger ist und/oder
- wobei das Fahrzeug zumindest sechs Radpositionen umfasst.

Ausführungsbeispiel 34:
Eine Vorrichtung, z.B. die Reifendrucksensoranordnung nach dem zweiten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 1 bis 12 durchzuführen und/oder zu steuern.

Ausführungsbeispiel 35:
Ein Computerprogramm, wobei das Computerprogramm, wenn es von einem Prozessor ausgeführt wird, eine Vorrichtung, z.B. die Vorrichtung gemäß dem zweiten Aspekt, veranlasst, die Aktionen und/oder Schritte des Verfahrens gemäß einem der Ausführungsbeispiele 1 bis 12 durchzuführen und/oder zu steuern.

Ausführungsbeispiel 36:
Eine Vorrichtung, z.B. die Vorrichtung nach dem vierten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 17 bis 25 durchzuführen und/oder zu steuern.

Ausführungsbeispiel 37:
Ein Computerprogramm, wobei das Computerprogramm, wenn es von einem Prozessor ausgeführt wird, eine Vorrichtung, z.B. die Vorrichtung gemäß dem vierten Aspekt, veranlasst, die Aktionen und/oder Schritte des Verfahrens gemäß einem der Ausführungsbeispiele 17 bis 25 durchzuführen und/oder zu steuern.

Ausführungsbeispiel 38:
Ein Computerprogrammprodukt, das ein Computerprogramm gemäß Ausführungsbeispiel 35 umfasst.

Ausführungsbeispiel 39:
Ein Computerprogrammprodukt, das ein Computerprogramm gemäß Ausführungsbeispiel 37 umfasst.

Ausführungsbeispiel 40:
Ein System, umfassend:
mindestens eine erste Vorrichtung gemäß Ausführungsform 13 bis 16 oder 34 und
mindestens eine zweite Vorrichtung gemäß Ausführungsform 26 bis 30 oder 36.

Ausführungsbeispiel 41:
Fahrzeug, insbesondere Nutzfahrzeug, umfassend ein System gemäß Ausführungsbeispiel 40.

Ausführungsbeispiel 42:
Fahrzeug nach Ausführungsbeispiel 41,
- wobei das Fahrzeug ein Anhänger ist und/oder
- wobei das Fahrzeug zumindest sechs Radpositionen umfasst.

In der vorliegenden Offenbarung ist jede in den beschriebenen Ausführungsformen dargestellte Verbindung so zu verstehen, dass die beteiligten Komponenten funktionell gekoppelt sind. Daher können die Verbindungen direkt oder indirekt sein, mit einer beliebigen Anzahl oder Kombination von dazwischenliegenden Elementen, und es kann lediglich eine funktionelle Beziehung zwischen den Komponenten bestehen.

Darüber hinaus können alle hierin beschriebenen oder dargestellten Verfahren, Prozesse und Aktionen unter Verwendung von ausführbaren Anweisungen in einem Mehrzweck- oder Spezialprozessor implementiert und auf einem computerlesbaren Speichermedium (z. B. Festplatte, Speicher oder dergleichen) gespeichert werden, um von einem solchen Prozessor ausgeführt zu werden. Verweise auf ein "computerlesbares Speichermedium" sollten so verstanden werden, dass sie auch spezialisierte Schaltungen wie FPGAs, ASICs, Signalverarbeitungsgeräte und andere Geräte umfassen.

Der Ausdruck "A und/oder B" umfasst eines der folgenden drei Szenarien: (i) A, (ii) B, (iii) A und B. Der Ausdruck "A und/oder B" hat die gleiche Bedeutung wie der Ausdruck "A oder B", und der Ausdruck "mindestens eines von A oder B" kann hier verwendet werden. Außerdem ist der Artikel "ein" nicht als "ein" (einziges) zu verstehen, d. h. die Verwendung des Ausdrucks "ein Element" schließt nicht aus, dass auch weitere Elemente vorhanden sind. Der Begriff "umfassend" ist in einem offenen Sinne zu verstehen, d.h. dass ein Gegenstand, der "ein Element A" umfasst, neben dem Element A auch weitere Elemente umfassen kann.

Es versteht sich, dass alle vorgestellten Ausführungsbeispiele (z.B. nur) beispielhaft sind, und dass jedes Merkmal, das für ein bestimmtes Ausführungsbeispiel vorgestellt wird, mit jedem beliebigen Aspekt allein oder in Kombination mit einem beliebigen Merkmal, das für dasselbe oder ein anderes bestimmtes Ausführungsbeispiel vorgestellt wird, und/oder in Kombination mit einem beliebigen anderen, nicht erwähnten Merkmal verwendet werden kann. Insbesondere sind die in dieser Beschreibung dargestellten Ausführungsbeispiele so zu verstehen, dass sie auch in allen möglichen Kombinationen miteinander offenbart werden, soweit dies technisch sinnvoll ist und die Ausführungsbeispiele keine Alternativen zueinander darstellen. Es versteht sich ferner, dass jedes Merkmal, das für ein Ausführungsbeispiel in einer bestimmten Kategorie (Verfahren/Gerät/Computerprogramm/System) dargestellt wird, auch in entsprechender Weise in einem Ausführungsbeispiel einer beliebigen anderen Kategorie verwendet werden kann. Es sollte auch verstanden werden, dass das Vorhandensein eines Merkmals in den vorgestellten Ausführungsbeispielen nicht unbedingt bedeutet, dass dieses Merkmal ein wesentliches Merkmal darstellt und nicht weggelassen oder ersetzt werden kann.

Die Angabe, dass ein Merkmal mindestens eines der nachfolgend aufgezählten Merkmale umfasst, ist nicht zwingend in der Weise, dass das Merkmal alle nachfolgend aufgezählten Merkmale oder mindestens ein Merkmal aus der Vielzahl der nachfolgend aufgezählten Merkmale umfasst. Auch eine Auswahl der aufgezählten Merkmale in beliebiger Kombination oder eine Auswahl von (z.B. nur) einem der aufgezählten Merkmale ist möglich. Auch die spezifische Kombination aller nachfolgend aufgezählten Merkmale kann in Betracht gezogen werden. Auch eine Vielzahl von (z.B. nur) einem der aufgezählten Merkmale kann möglich sein.

Die oben dargestellte Abfolge aller Verfahrensschritte ist nicht zwingend, auch alternative Abfolgen sind denkbar. Dennoch ist die in den Figuren beispielhaft dargestellte konkrete Abfolge von Verfahrensschritten als eine mögliche Abfolge von Verfahrensschritten für die jeweilige Ausführungsform, die durch die jeweilige Figur beschrieben wird, anzusehen.

Der Gegenstand ist oben anhand von Ausführungsbeispielen beschrieben worden. Es wird darauf hingewiesen, dass es alternative Wege und Variationen gibt, die für den Fachmann naheliegend sind und umgesetzt werden können, ohne vom Anwendungsbereich der beigefügten Ansprüche abzuweichen.

## Patentansprüche

1. Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Senden eines Kommunikationssignals umfassend eine Reifendruckindikation und eine Laufwegindikation, wobei die Reifendruckindikation zumindest den erfassten Innendruck des Reifens repräsentiert, und wobei die Laufwegindikation zumindest einen von dem Rad zurückgelegten Laufweg repräsentiert.

2. Verfahren nach Anspruch 1, ferner umfassend
- Erfassen zumindest einer Beschleunigung und/oder
- Erfassen zumindest einer Beschleunigung, wobei mehrere Beschleunigungen in zumindest zwei oder drei verschiedenen Erfassungsachsen erfasst werden.

3. Verfahren nach Anspruch 2,
- wobei die Laufwegindikation auf der zumindest einen erfassten Beschleunigung basiert.

4. Verfahren nach einem der Ansprüche 1 bis 3,
- wobei die Laufwegindikation einen von dem Rad zurückgelegten Laufweg während zumindest einer Kurvenfahrt repräsentiert und/oder
- wobei der Laufweg einer Differenz zwischen einer Anfangsdrehwinkelposition des Rads und einer Enddrehwinkelposition des Rads entspricht,
- wobei die Anfangsdrehwinkelposition einer Drehwinkelposition des Rads zu Beginn einer Kurvenfahrt entspricht und/oder
- wobei die Enddrehwinkelposition einer Drehwinkelposition des Rads am Ende einer Kurvenfahrt entspricht und/oder
- wobei der Laufweg über zumindest zwei oder mehr Kurvenfahrten summiert ist,
und/oder
- wobei der Laufweg über zumindest zwei oder mehr Kurvenfahrten summiert ist, wobei die Kurvenfahrten jeweils die gleiche Richtung aufweisen und/oder
- wobei das Senden abhängig ist von einer Kurvenfahrt, insbesondere von dem Detektieren eines Beginns der Kurvenfahrt und/oder eines Endes der Kurvenfahrt und/oder einer Richtung der Kurvenfahrt..

5. Verfahren nach einem der Ansprüche 2 bis 4, ferner umfassend
- Bestimmen und/oder Ableiten der Laufwegindikation basierend auf der zumindest einen erfassten Beschleunigung, und/oder
- Bestimmen und/oder Ableiten der Laufwegindikation basierend auf der zumindest einen erfassten Beschleunigung
- wobei das Bestimmen und/oder Ableiten der Laufwegindikation abhängig ist von einer Drehgeschwindigkeitsindikation des Rads und/oder
- wobei das Bestimmen und/oder Ableiten der Laufwegindikation abhängig ist von einer Drehrichtungsindikation des Rads und/oder
- wobei das Bestimmen und/oder Ableiten der Laufwegindikation abhängig ist von einer Kurvenfahrt, insbesondere von dem Detektieren eines Beginns einer Kurvenfahrt und/oder eines Endes einer Kurvenfahrt und/oder einer Richtung der Kurvenfahrt, und/oder
- Bestimmen und/oder Ableiten, aus der zumindest einen erfassten Beschleunigung, einer Drehwinkelindikation, einer Drehrichtungsindikation und/oder einer Drehgeschwindigkeitsindikation.

6. Reifendrucksensoranordnung für Fahrzeuge, insbesondere Nutzfahrzeuge, umfassend einen Drucksensor und Mittel, die dazu eingerichtet sind, das Verfahren nach einem der Ansprüche 1 bis 5 auszuführen und/oder zu steuern.

7. Verfahren zur Reifendrucküberwachung eines Fahrzeugs, insbesondere Nutzfahrzeugs, ausgeführt durch eine Vorrichtung, umfassend
- Empfangen eines Kommunikationssignals umfassend eine Reifendruckindikation eines Reifens eines Rads und eine Laufwegindikation des Rads von einer Reifendrucksensoranordnung, und
- Zuordnen einer Radposition zu der Reifendrucksensoranordnung zumindest basierend auf der Laufwegindikation.

8. Verfahren nach Anspruch 7, ferner umfassend
- Bestimmen und/oder Ableiten eines Laufwegs des Rads aus der Laufwegindikation und/oder
- wobei das Zuordnen zumindest teilweise auf der empfangenen Laufwegindikation und/oder dem Laufweg einerseits und zumindest einem Referenzlaufweg für zumindest eine Radposition andererseits basiert.

9. Verfahren nach Anspruch 7 oder 8,
- ferner umfassend Empfangen eines weiteren Kommunikationssignals umfassend eine weitere Reifendruckindikation eines weiteren Reifens eines weiteren Rads und eine weitere Laufwegindikation des weiteren Rads von einer weiteren Reifendrucksensoranordnung, und
- wobei das Zuordnen ferner auf der weiteren Laufwegindikation basiert.

10. Verfahren nach einem der Ansprüche 7 bis 9,
- wobei das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation umfasst und/oder
- wobei das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation umfasst, wobei das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung basiert.

11. Verfahren nach einem der Ansprüche 7 bis 10, ferner umfassend
- Erfassen zumindest einer Fahrzeugbeschleunigung und/oder
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

12. Verfahren nach einem der Ansprüche 7 bis 11, wobei der Referenzlaufweg
- auf einem weiteren Kommunikationssignal basiert, wobei das weitere Kommunikationssignal von einer weiteren Reifendrucksensoranordnung stammt, und/oder
- für eine Radposition vordefiniert ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist.

13. Vorrichtung, umfassend Mittel, die dazu eingerichtet sind, das Verfahren nach einem der Ansprüche 7 bis 12 auszuführen und/oder zu steuern.

14. System umfassend zumindest eine Reifendrucksensoranordnung nach Anspruch 6 und eine Vorrichtung nach Anspruch 13.

15. Fahrzeug, insbesondere Nutzfahrzeug, umfassend ein System gemäß Anspruch 14.
